# EUROPEAN PATENT APPLICATION

(11) **EP 4 175 241 A1**
(43) Date of publication of application: **03.05.2023**
(21) Application number: 21847279.3
(22) Date of filing: 15.07.2021
(51) Int. Cl.: H04L 41/00

(54) **FILE DOWNLOAD METHOD, DEVICE, AND SYSTEM**

(30) Priority: 22.07.2020 CN 202010711732; 28.09.2020 CN 202011045834
(71) Applicant: Huawei Technologies Co., Ltd., Longgang District Shenzhen, Guangdong 518129 (CN)
(72) Inventor: ZHU, Lei, Shenzhen, Guangdong 518129 (CN); ZHANG, Yaokun, Shenzhen, Guangdong 518129 (CN); YANG, Zhenxing, Shenzhen, Guangdong 518129 (CN)
(74) Representative: Epping - Hermann - Fischer
(86) International application number: PCT/CN2021/106556
(87) International publication number: WO 2022/017253

(57) **Abstract**

This application provides a file download method, a device, and a system, and belongs to the field of network technologies. In this application, in a three-layer system architecture including a client device, a relay device, and a server device, indication information is added to a packet, to indicate that the relay device has a file required by the client. The client device can download the file from the relay device by interacting with the relay device, so that the client device can download the file nearby. This reduces bandwidth occupied for file transfer.

## Description

This application claims priority to Chinese Patent Application No. 202010711732.7, filed on July 22, 2020 and entitled "FILE TRANSFER METHOD, APPARATUS, AND SYSTEM", which is incorporated herein by reference in its entirety.

This application claims priority to Chinese Patent Application No. 202011045834.6, filed on September 28, 2020 and entitled "FILE DOWNLOAD METHOD, DEVICE, AND SYSTEM", which is incorporated herein by reference in its entirety.

### TECHNICAL FIELD

This application relates to the field of network technologies, and in particular, to a file download method, a device, and a system

### BACKGROUND

In some large-scale and geographically dispersed networks, when a file needs to be downloaded to a client device, a server device transfers the file to the client device based on a file transfer protocol (file transfer protocol, FTP). However, because a distance between the server device and the client device is relatively long, file transfer occupies an excessively large bandwidth.

### SUMMARY

Embodiments of this application provide a file download method, a device, and a system, to reduce bandwidth occupied for file transfer. The technical solutions are as follows:
According to a first aspect, a file download method is provided, applied to a communications system including a client device, a relay device, and a server device. In the method, the client device sends a request packet. The client device receives a response packet sent by the relay device, where the response packet is a response to the request packet, the response packet includes first indication information, and the first indication information indicates that the relay device includes a target file. The client device downloads the target file from the relay device based on the first indication information.

In the method provided above, in the three-layer system architecture including the client device, the relay device, and the server device, indication information is added to a packet, to indicate that the relay device has a file required by the client. The client device can download the file from the relay device by interacting with the relay device, so that the client device can download the file nearby. This reduces bandwidth occupied for file transfer.

In a possible implementation, the first indication information includes first information of the target file, and the first information includes one or more of the following: a file name, a version number, a file type, and a file storage address. Specific file information such as a file storage address is added to a packet exchanged between the client device, the relay device, and the server device, so that the file information is transferred between the client device, the relay device, and the server device along with packet forwarding. In this way, the client device can obtain the specific file information from the received packet, to implement file download. This reduces a configuration workload, facilitates reuse of an existing forwarding mechanism of a network, reduces complexity of solution implementation, and improves practicability of the solution.

In a possible implementation, the request packet includes second indication information, and the second indication information indicates that the client device requests the target file.

The client adds indication information to the request packet, to indicate that the client has a file download requirement. This helps simplify processing logic of the relay device or the server device.

In a possible implementation, the second indication information includes one or more of the following: a file name, a version number, and a file type.

The client device adds specific file information such as a file name to the request packet, to specify, by using the request packet, a specific file that needs to be downloaded, so that the relay device or the server device can clearly query, based on the file information, whether the file required by the client device exists locally. This helps a file subsequently provided by the relay device or the server device more accurately meet a requirement of the client device. In a possible implementation, the request packet is one of the following protocol packets: a dynamic host configuration protocol (Dynamic Host Configuration Protocol, DHCP) packet, a remote authentication dial-in user service (remote authentication dial-in user service, RADIUS) packet, or a point-to-point protocol over Ethernet (Point-to-Point Protocol over Ethernet, PPPoE) packet.

The foregoing manner supports smooth integration of a file download process with DHCP, RADIUS, or PPPoE, to facilitate reuse of a system architecture in DHCP, RADIUS, or PPPoE and a communication process implementation solution. This reduces complexity of solution implementation and configuration, and improves availability of the solution.

In a possible implementation, when the request packet is the DHCP packet, the relay device is a DHCP relay relay device, and the client device is a DHCP client device.

The foregoing manner supports reuse of an existing three-layer system architecture implementation solution in DHCP, to improve availability of the solution.

In a possible implementation, the request packet is a DHCP discover (discover) packet, and the response packet is a DHCP offer (offer) packet; or the request packet is a DHCP request (request) packet, and the response packet is a DHCP acknowledge (Acknowledge, ACK) packet.

The foregoing provides a plurality of implementations of reusing a communication mechanism in DHCP to download a file, to further improve availability of the solution.

In a possible implementation, when the request packet is the RADIUS packet, the relay device is a RADIUS relay device, and the client device is a RADIUS client device.

The foregoing manner supports reuse of an existing three-layer system architecture implementation solution in RADIUS, to improve availability of the solution.

In a possible implementation, the request packet is a RADIUS access-request (access-request) packet, and the response packet is a RADIUS access-accept (access-accept) packet; or the request packet is a RADIUS accounting-request (accounting-request) packet, and the response packet is a RADIUS accounting-response (accounting-response) packet. The foregoing provides a plurality of implementations of reusing a communication mechanism in RADIUS to download a file, to further improve availability of the solution.

In a possible implementation, when the request packet is the PPPoE packet, the relay device is a PPPoE relay device, and the client device is a PPPoE client device.

The foregoing manner supports reuse of an existing three-layer system architecture implementation solution in PPPoE, to improve availability of the solution.

In a possible implementation, the request packet is a PPPoE active discovery initiation (PPPoE Active Discovery Initiation, PAD!) packet, and the response packet is a PPPoE active discovery offer (PPPoE Active Discovery Offer, PADO packet); or the request packet is a PPPoE active discovery request (PPPoE Active Discovery Request, PADR) packet, and the response packet is a PPPoE active discovery session-confirmation (PPPoE Active Discovery Session-confirmation, PADS) packet.

The foregoing provides a plurality of implementations of reusing a communication mechanism in PPPoE to download a file, to further improve availability of the solution.

In a possible implementation, the response packet includes a first option part, the first option part includes a type field and a value field, the value field includes the first indication information, and the type field is used to identify that the first option part includes the first indication information.

A new type of option is extended in the response packet to carry indication information, so that the device can directly obtain the indication information from the response packet. This reduces network configurations.

In a possible implementation, the request packet includes a second option part, the second option part includes a type field and a value field, the value field includes the second indication information, and the type field is used to identify that the second option part includes the second indication information.

A new type of option is extended in the request packet to carry indication information, so that the device can directly obtain the indication information from the request packet. This reduces network configurations.

In a possible implementation, before the client device downloads the target file from the relay device based on the first indication information, the method further includes: The client device determines that a type of the target file and a type of the client device meet a match condition.

In this manner, it is ensured that the target file downloaded by the client matches the type of the client. This helps the downloaded file more accurately match a requirement of the client.

In a possible implementation, the target file is system software or a patch file, and after the client device downloads the target file from the relay device based on the first indication information, the method further includes: The client device performs upgrade based on the system software; or the client device loads a patch based on the patch file.

In this manner, the solution meets requirements of device upgrade and patch loading, to meet requirements of more application scenarios.

In a possible implementation, the target file is obtained by the relay device from the server device.

According to a second aspect, a file transfer method is provided, applied to a communications system including a client device, a relay device, and a server device. In the method, the relay device receives a first request packet sent by the client device. The relay device sends a first response packet to the client device, where the first response packet is a response to the first request packet, the first response packet includes first indication information, and the first indication information indicates that the relay device includes a target file. The relay device transfers the target file to the client device in response to the first response packet.

In the method provided above, in the three-layer system architecture including the client device, the relay device, and the server device, a packet transmitted between the client device and the relay device is used to indicate that the relay device has a file required by the client. The client device can download the file from the relay device by interacting with the relay device, so that the file can be downloaded nearby. This reduces bandwidth occupied for file transfer. In a possible implementation, the first request packet includes second indication information, and the second indication information indicates that the client device requests the target file.

Because the client adds indication information to the request packet, to indicate that the client has a file download requirement, the relay device can obtain specific file information from the received packet. This reduces a configuration workload.

In a possible implementation, before the relay device transfers the target file to the client device, the method further includes: The relay device sends a second request packet to the server device. The relay device receives a second response packet sent by the server device, where the second response packet is a response to the second request packet, the second response packet includes third indication information, and the third indication information indicates that the server device includes the target file. The relay device downloads the target file based on the third indication information.

In the method provided above, a packet transmitted between the relay device and the server device is used to indicate that the server device has a file required by the client, so that the relay device can download the file from the server device by using the indication information carried in the packet. This reduces a configuration workload, and improves practicability of the solution.

In a possible implementation, the second request packet includes fourth indication information, and the fourth indication information indicates that the relay device requests the target file. The relay device adds indication information to the request packet, to indicate that the relay device has a file download requirement. This helps simplify processing logic of the server device.

In a possible implementation, before the relay device sends the first response packet to the client device, the method further includes: The relay device determines the target file based on a type of the client device, where a type of the target file and the type of the client device meet a match condition.

In this manner, it is ensured that the target file transferred by the relay device to the client matches the type of the client. This helps the transferred file more accurately match a requirement of the client.

According to a third aspect, a file transfer method is provided, applied to a communications system including a client device, a relay device, and a server device. In the method, the server device receives a first request packet sent by the relay device. The server device generates a first response packet, where the first response packet is a response to the first request packet, the first response packet includes first indication information, and the first indication information indicates that the server device includes a target file. The server device sends the first response packet to the relay device.

In the method provided above, in the three-layer system architecture including the client device, the relay device, and the server device, a packet transmitted between the relay device and the server device is used to indicate that the server device has a file required by the client, so that the relay device can download the file from the server device by using the indication information carried in the packet. This reduces a configuration workload, and improves practicability of the solution.

In a possible implementation, the first request packet includes second indication information, and the second indication information indicates that the relay device requests the target file.

The relay device adds indication information to the request packet, to indicate that the relay device has a file download requirement. This helps simplify processing logic of the server device.

In a possible implementation, before the server device generates the first response packet, the method further includes: The server device determines the target file based on a type of the client device, where a type of the target file and the type of the client device meet a match condition.

In this manner, it is ensured that the target file transferred by the server device to the relay device matches the type of the client. This helps the transferred file more accurately match a requirement of the client.

According to a fourth aspect, a client device is provided. The client device has a function of implementing any one of the first aspect or the optional manners of the first aspect. The client device includes at least one unit, and the at least one unit is configured to implement the file download method provided in any one of the first aspect or the optional manners of the first aspect.

In some embodiments, the unit in the client device is implemented by using software, and the unit in the client device is a program module. In some other embodiments, the unit in the client device is implemented by using hardware or firmware. For specific details of the client device provided in the fourth aspect, refer to any one of the first aspect or the optional manners of the first aspect. Details are not described herein again.

According to a fifth aspect, a relay device is provided. The relay device has a function of implementing any one of the second aspect or the optional manners of the second aspect. The relay device includes at least one unit, and the at least one unit is configured to implement the file transfer method provided in any one of the second aspect or the optional manners of the second aspect.

In some embodiments, the unit in the relay device is implemented by using software, and the unit in the relay device is a program module. In some other embodiments, the unit in the relay device is implemented by using hardware or firmware. For specific details of the relay device provided in the fifth aspect, refer to any one of the second aspect or the optional manners of the second aspect. Details are not described herein again.

According to a sixth aspect, a server device is provided. The server device has a function of implementing any one of the second aspect or the optional manners of the second aspect. The server device includes at least one unit, and the at least one unit is configured to implement the file transfer method provided in any one of the second aspect or the optional manners of the second aspect.

In some embodiments, the unit in the server device is implemented by using software, and the unit in the server device is a program module. In some other embodiments, the unit in the server device is implemented by using hardware or firmware. For specific details of the server device provided in the sixth aspect, refer to any one of the second aspect or the optional manners of the second aspect. Details are not described herein again.

According to a seventh aspect, a client device is provided. The client device includes a processor and a communications interface. The processor is configured to execute instructions, so that the client device performs the method provided in any one of the first aspect or the optional manners of the first aspect. The communications interface is configured to receive or send a packet. For specific details of the client device provided in the seventh aspect, refer to any one of the first aspect or the optional manners of the first aspect. Details are not described herein again. According to an eighth aspect, a relay device is provided. The relay device includes a processor and a communications interface. The processor is configured to execute instructions, so that the relay device performs the file transfer method provided in any one of the second aspect or the optional manners of the second aspect. The communications interface is configured to receive or send a packet. For specific details of the relay device provided in the eighth aspect, refer to any one of the second aspect or the optional manners of the second aspect. Details are not described herein again. According to a ninth aspect, a server device is provided. The server device includes a processor and a communications interface. The processor is configured to execute instructions, so that the server device performs the file transfer method provided in any one of the second aspect or the optional manners of the second aspect. The communications interface is configured to receive or send a packet. For specific details of the server device provided in the ninth aspect, refer to any one of the second aspect or the optional manners of the second aspect. Details are not described herein again.

According to a tenth aspect, a computer-readable storage medium is provided. The storage medium stores at least one instruction. The instruction is read by a processor, so that a client device performs the file download method provided in any one of the first aspect or the optional manners of the first aspect.

According to an eleventh aspect, a computer-readable storage medium is provided. The storage medium stores at least one instruction. The instruction is read by a processor, so that a relay device performs the file transfer method provided in any one of the second aspect or the optional manners of the second aspect.

According to a twelfth aspect, a computer-readable storage medium is provided. The storage medium stores at least one instruction. The instruction is read by a processor, so that a server device performs the file transfer method provided in any one of the third aspect or the optional manners of the third aspect.

According to a thirteenth aspect, a computer program product is provided. The computer program product includes computer instructions, and the computer instructions are stored in a computer-readable storage medium. A processor of a client device reads the computer instructions from the computer-readable storage medium, and executes the computer instructions, so that the client device performs the file download method provided in any one of the first aspect or the optional manners of the first aspect.

According to a fourteenth aspect, a computer program product is provided. The computer program product includes computer instructions, and the computer instructions are stored in a computer-readable storage medium. A processor of a relay device reads the computer instructions from the computer-readable storage medium, and executes the computer instructions, so that the relay device performs the file transfer method provided in any one of the second aspect or the optional manners of the second aspect.

According to a fifteenth aspect, a computer program product is provided. The computer program product includes computer instructions, and the computer instructions are stored in a computer-readable storage medium. A processor of a server device reads the computer instructions from the computer-readable storage medium, and executes the computer instructions, so that the server device performs the file transfer method provided in any one of the third aspect or the optional manners of the third aspect.

According to a sixteenth aspect, a chip is provided. When the chip is run on a client device, the client device is enabled to perform the file download method provided in any one of the first aspect or the optional manners of the first aspect. According to a seventeenth aspect, a chip is provided. When the chip is run on a relay device, the relay device is enabled to perform the file transfer method provided in any one of the second aspect or the optional manners of the second aspect.

According to an eighteenth aspect, a chip is provided. When the chip is run on a server device, the server device is enabled to perform the file transfer method provided in any one of the third aspect or the optional manners of the third aspect.

According to a nineteenth aspect, a communications system is provided. The communications system includes a client device, a relay device, and a server device. The client device is configured to perform the method in any one of the first aspect or the optional manners of the first aspect. The relay device is configured to perform the method in any one of the second aspect or the optional manners of the second aspect. The server device is configured to perform the method in any one of the third aspect or the optional manners of the third aspect.

According to a twentieth aspect, a client device is provided. The client device includes a main control board and an interface board, and may further include a switching board. The client device is configured to perform the method in any one of the first aspect or the possible implementations of the first aspect. Specifically, the client device includes a unit configured to perform the method in any one of the first aspect or the possible implementations of the first aspect. According to a twenty-first aspect, a relay device is provided. The relay device includes a main control board and an interface board, and may further include a switching board. The relay device is configured to perform the method in any one of the second aspect or the possible implementations of the second aspect. Specifically, the relay device includes a unit configured to perform the method in any one of the second aspect or the possible implementations of the second aspect.

According to a twenty-second aspect, a server device is provided. The server device includes a main control board and an interface board, and may further include a switching board. The server device is configured to perform the method in any one of the third aspect or the possible implementations of the third aspect. Specifically, the server device includes a unit configured to perform the method in any one of the third aspect or the possible implementations of the third aspect.

### BRIEF DESCRIPTION OF DRAWINGS

FIG. 1 is a schematic diagram of a system architecture 100 according to an embodiment of this application;
FIG. 2 is a schematic flowchart of DHCP interaction according to an embodiment of this application;
FIG. 3 is a schematic diagram of a packet format of a DHCP packet according to an embodiment of this application;
FIG. 4 is a schematic diagram of a format of option X according to an embodiment of this application;
FIG. 5 is a flowchart of a file transfer method according to an embodiment of this application;
FIG. 6 is a flowchart of a file transfer method according to an embodiment of this application;
FIG. 7 is a flowchart of a file transfer method according to an embodiment of this application;
FIG. 8 is a flowchart of a file transfer method according to an embodiment of this application;
FIG. 9 is a schematic diagram of a packet format of a RADIUS packet according to an embodiment of this application;
FIG. 10 is a schematic diagram of a structure of a client device according to an embodiment of this application;
FIG. 11 is a schematic diagram of a structure of a relay device according to an embodiment of this application;
FIG. 12 is a schematic diagram of a structure of a server device according to an embodiment of this application;
FIG. 13 is a schematic diagram of a structure of a device 900 according to an embodiment of this application;
FIG. 14 is a schematic diagram of a structure of a device 1500 according to an embodiment of this application; and
FIG. 15 is a schematic diagram of a structure of a communications system according to an embodiment of this application.

### DESCRIPTION OF EMBODIMENTS

To make objectives, technical solutions, and advantages of this application clearer, the following further describes implementations of this application in detail with reference to accompanying drawings.

The following first describes some concepts related to terms in embodiments of this application.

### (1) File transfer protocol (file transfer protocol, FTP)

FTP is a set of standard protocols used for file transfer on a network. FTP works at an application layer. FTP uses a client/server (client/server, C/S) communication mode. An FTP server device is used to store a file. An FTP client device uses FTP to access the file on the FTP server device.

### (2) Dynamic host configuration protocol (Dynamic Hosting Configuration Protocol, DHCP)

DHCP is a protocol used to dynamically manage and configure internet protocol (internet protocol, IP) addresses in a centralized manner. DHCP allows a computer to dynamically obtain the IP address. In addition, DHCP can assign another configuration parameter in addition to the IP address, for example, a startup configuration file of a client device. DHCP is defined by RFC 2131 in request for comments (request for comments, RFC, a series of numbered files). DHCP uses a client/server communication mode. A client (DHCP Client) device submits a configuration application to a server (DHCP Server) device, and the server device returns configuration information assigned to the client device. DHCP has the following advantages: First, DHCP is easy to configure and deploy, which reduces configuration and maintenance costs of the client device. Second, DHCP facilitates centralized management. The DHCP server device can manage configuration information of a plurality of network segments. When configuration information of a network segment changes, an administrator only needs to update a related configuration on the DHCP server device. DHCP networking mainly includes three roles: a DHCP server device, a DHCP relay device, and a DHCP client device. DHCP includes two scenarios. One scenario is dynamic host configuration protocol for internet protocol version 4 (internet protocol version 4, IPv4) (dynamic host configuration protocol for IPv4, DHCPv4), and the other scenario is dynamic host configuration protocol for internet protocol version 6 (internet protocol version 6, IPv6) (dynamic host configuration protocol for IPv6, DHCPv6).

### (3) DHCP server device

The DHCP server device is responsible for selecting an IP address from an address pool and allocating the IP address to a DHCP client device. Optionally, the DHCP server device further provides another network parameter in addition to the IP address for the DHCP client device. The DHCP server device can receive and process a DHCP request packet forwarded by a DHCP relay device on a local network segment or across network segments.

### (4) DHCP client device

The DHCP client device sends a DHCP request packet. The DHCP client device is a device that requests to obtain an IP address or another network parameter through DHCP. For example, the DHCP client device is an IP phone, a personal computer (Personal Computer, PC), a mobile phone, or a diskless workstation.

### (5) DHCP relay (DHCP relay) device

The DHCP relay device is responsible for forwarding a DHCP packet between a DHCP server device and a DHCP client device. Specifically, when the DHCP client device and the DHCP server device are located on a same network segment, after the DHCP client device broadcasts a request packet (whose destination IP address is 255.255.255.255), the DHCP server device can receive the request packet because the DHCP server device and the DHCP client device are located on the same network segment. When the DHCP client device and the DHCP server device are located on different network segments, the DHCP server device cannot directly receive the request packet from the DHCP client device. In view of this, the DHCP relay device is deployed to forward the DHCP packet between the DHCP server device and the DHCP client device, to ensure normal interaction between the DHCP server device and the DHCP client device.

### (6) DHCPv4

DHCPv4 is designed for an IPv4 addressing scheme. DHCPv4 is used to assign an IPv4 address or another network configuration parameter to a host.

### (7) DHCPv6

DHCPv6 is designed for an IPv6 addressing scheme. DHCPv6 is used to assign an IPv6 address, an IPv6 prefix, or another network configuration parameter to a host.

### (8) IP radio access network (IP radio access network, IP RAN)

The IP RAN is an IP radio access network (wireless access network, RAN). The IP RAN is a RAN solution that uses an IP transmission technology to replace a conventional multi-service transport platform (multi-service transport platform, MSTP) technology. The IP RAN can provide reliable connections for various types of network devices (such as base stations) to access a base station controller.

### (9) Access transport network (access transport network, ATN) device

The ATN device is deployed at the edge of a mobile bearer network. The ATN device is usually a box-type device oriented to multi-service access. The ATN device is usually deployed at an access layer of a metropolitan area network or at an access site with heavy traffic, to implement multi-service access.

The following describes an application scenario in embodiments of this application and a case of the scenario in a specific application.

A method provided in embodiments of this application can be applied to a scenario in which a client device downloads a file, for example, applied to a scenario in which a network device performs upgrade by downloading system software. The scenario in which the network device performs upgrade is used as an example below.

A large quantity of carrier network devices, such as network devices, exist on the IP RAN or another communication network. During the upgrade of the network device, an operator needs to use a network management tool in a laboratory to transfer system software (such as a file with an extension of .cc) to the network devices through FTP. To ensure stable running of a network, an upgrade time of the network device is usually limited to the early morning when service traffic is light. Because the upgrade time is limited and a time for transferring the system software through FTP is fixed, the upgrade is slow when there are a large quantity of network devices.

In a related technology, a network management upgrade tool is installed on a network management device (such as a PC). Then, as an FTP server device, the network management device is remotely connected to each network device through FTP or the secure file transfer protocol (secure file transfer protocol, SFTP). After the network management device transfers system software to each network device, each network device uses the obtained system software to perform upgrade and restarts after the upgrade is completed. However, centralized upgrade of network management devices may occupy excessively high bandwidth. In addition, because the to-be-upgraded network device is far away from the network management device, there is a high probability that the network device fails to be upgraded due to network quality on the network.

However, in some embodiments of this application, based on a network architecture including a client device, a relay device, and a server device, a network device serves as the client device to download system software from the relay device, so as to perform upgrade by using the system software. Because a distance between the network device and the relay device is less than a distance between the network device and the server device, that is, the network device is closer to the relay device, nearby download of the system software is implemented, and further nearby upgrade of the network device is implemented. Through nearby download and nearby upgrade, bandwidth occupation caused by the upgrade can be reduced, and a probability of an upgrade failure caused by network instability can be reduced.

It should be noted that embodiments do not limit a specific type of a file downloaded by the client device by using the technical solutions, and do not limit a manner in which the client device applies the downloaded file. The foregoing description of downloading the system software and applying the file for upgrade is only an example of the application scenario. For another example, the client device downloads a file of another type by using the technical solutions, and applies the file of another type to implement another function. For example, the file downloaded by the client device is a patch file. For example, the patch file is a file with an extension of patch (patch, PAT). The client device loads a patch by using the patch file. For still another example, the file downloaded by the client device is a video, and the client device plays the locally downloaded video.

The following describes an example of a system architecture in embodiments of this application.

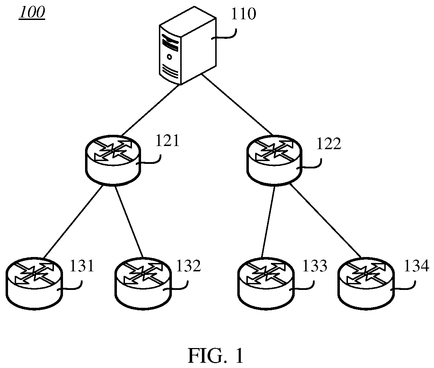

FIG. 1 shows an example of a system architecture 100 according to an embodiment of this application. The system architecture 100 includes a three-layer structure. One layer of structure includes one or more client devices, another layer of structure includes one or more relay devices, and another layer of structure includes one or more server devices. For example, as shown in FIG. 1, the system 100 includes a server device 110, a relay device 121, a relay device 122, a client device 131, a client device 132, a client device 133, and a client device 134.

The client device in the system 100 is, for example, a network device or a computing device. The relay device in the system 100 is, for example, a network device or a computing device. For example, the client device in the system 100 includes a switch, a router, an ATN device, a terminal, or another device. The relay device in the system 100 includes a switch, a router, an ATN device, or another device. Optionally, one or more devices in the system 100 are physical devices; or one or more devices in the system 100 are virtual devices.

For example, the system 100 is an IP RAN system The client device in the system 100 is a network device. Optionally, the relay device in the system 100 is an aggregation device in the IP RAN. Optionally, the server device in the system 100 is a core device or a network management device in the IP RAN.

The server device 110 is connected to the relay device 121 and the relay device 122 over a network. The relay device 121 is connected to the client device 131 and the client device 132 over the network. The relay device 122 is connected to the client device 133 and the client device 134 over the network.

The system 100 is an example of a tree networking architecture. The client device 131 and the client device 132 communicate with the server device 110 by using the relay device 121. The client device 133 and the client device 134 communicate with the server device 110 by using the relay device 122. The networking architecture of the system 100 may alternatively be in another form. For example, the client device 132 may alternatively be connected to the relay device 122. Other networking forms are not enumerated one by one herein.

The system 100 is implemented in a plurality of manners. The following uses Manner 1 to Manner 3 as examples for description.

Manner 1: The system 100 performs communication based on DHCP.

Specifically, the server device 110 is a DHCP server device. The relay device 121 and the relay device 122 are DHCP relay devices. The client device 131, the client device 132, the client device 133, and the client device 134 are DHCP client devices. The client device, the relay device, and the server device included in the system 100 communicate with each other based on DHCP.

For example, Manner 1 includes Manner (1.1) and Manner (1.2).

Manner (1.1): The system 100 performs communication based on DHCPv4.

Specifically, the server device 110 is a DHCPv4 server device. The relay device 121 and the relay device 122 are DHCPv4 relay devices. The client device 131, the client device 132, the client device 133, and the client device 134 are DHCPv4 client devices. The client device, the relay device, and the server device included in the system 100 communicate with each other based on DHCPv4.

Manner (1.2): The system 100 performs communication based on DHCPv6.

Specifically, the server device 110 is a DHCPv6 server device. The relay device 121 and the relay device 122 are DHCPv6 relay devices. The client device 131, the client device 132, the client device 133, and the client device 134 are DHCPv6 client devices. The client device, the relay device, and the server device included in the system 100 communicate with each other based on DHCPv6.

Manner 2: The system 100 performs communication based on the point-to-point protocol over Ethernet (Point-to-Point Protocol over Ethernet, PPPoE).

Specifically, the server device 110 is a PPPoE server device. The relay device 121 and the relay device 122 are PPPoE relay devices. The client device 131, the client device 132, the client device 133, and the client device 134 are PPPoE client devices. The client device, the relay device, and the server device included in the system 100 communicate with each other based on PPPoE.

Manner 3: The system 100 performs communication based on the remote authentication dial-in user service (remote authentication dial-in user service, RADIUS).

Specifically, the server device 110 is a RADIUS server device. The relay device 121 and the relay device 122 are RADIUS relay devices. The client device 131, the client device 132, the client device 133, and the client device 134 are RADIUS client devices. The client device, the relay device, and the server device included in the system 100 communicate with each other based on RADIUS.

In the system 100, there are a plurality of possible manners of determining, by a client device, a relay device corresponding to the client device. The following describes, by using Manner A and Manner B, examples of manners of determining the relay device by the client device.

Manner A: The client device determines the relay device corresponding to the client device nearby.

When the client device goes online, the client device determines that a device that directly exchanges a packet with the client device or is directly connected to the client device is the relay device. For example, if the client device 131 determines, when the client device 131 goes online, that a device that is directly connected to the client device 131 or directly exchanges a packet with the client device 131 is the relay device 121, the client device 131 determines that a relay device corresponding to the client device 131 is the relay device 121. The client device 131 determines that the relay device corresponding to the client device 131 is the relay device 121, to subsequently obtain a required file from the relay device 121. In this manner, the client obtains the file from the relay device nearby, to improve file download efficiency.

Manner B: The relay device corresponding to the client device is determined in a specified manner.

For example, network operation and maintenance personnel may specify, by using a network management system or another configuration management tool, that relay devices include the relay device 121 and the relay device 122. Further, the network operation and maintenance personnel may specify corresponding client devices such as the client device 131 and the client device 132 for the relay device 121, and specify corresponding client devices such as the client device 133 and the client device 134 for the relay device 121. In the foregoing specified manner, the client device may obtain a corresponding file by using the relay device corresponding to the client device, to accelerate a file obtaining process.

A quantity of relay devices connected to one server device in the system 100 is not limited in this embodiment. FIG. 1 shows an example in which one server device is connected to two relay devices. Persons skilled in the art may know that the server device 110 may be connected to more relay devices. For example, the server device 110 is connected to dozens or hundreds of relay devices, or more relay devices. In this case, although not shown in FIG. 1, the system 100 further includes another relay device.

A quantity of client devices connected to one relay device in the system 100 is not limited in this embodiment. FIG. 1 shows an example in which one relay device is connected to two client devices. Persons skilled in the art may know that the relay device 121 or the relay device 122 may be connected to more client devices. For example, the relay device 110 or the relay device 122 is connected to dozens or hundreds of client devices, or more client devices. In this case, although not shown in FIG. 1, the system 100 further includes another client device.

Especially, when one relay device is connected to a large quantity of client devices, the large quantity of clients can obtain files from the relay device, so that the files are downloaded from the relay device to all the client devices in batches. This helps transfer the files to the client devices in batches more quickly and efficiently.

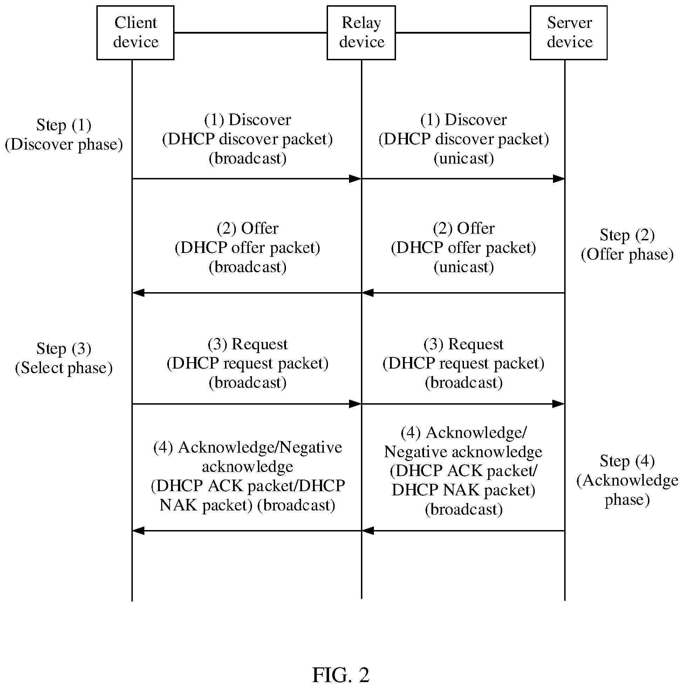

The foregoing describes the system architecture in embodiments of this application by using the system 100. The following describes, with reference to FIG. 2, a basic process in which a system performs interaction based on DHCP. For example, in the process in which the system 100 performs interaction based on DHCP, a new type of option is extended in a DHCP packet to carry file-related information.

The process shown in FIG. 2 may be implemented by using the system 100. For example, a server device in step 1 to step 4 described below is the server device 110. A DHCP relay device in step 1 to step 4 described below is the relay device 121 or the relay device 122. A client device in step 1 to step 4 described below is one of the client device 131, the client device 132, the client device 133, or the client device 134.

The process shown in FIG. 2 is referred to as four-step interaction for short, and specifically includes step 1 to step 4. Step 1: The client device broadcasts a DHCP discover (DHCP discover) packet. After the DHCP relay device receives the DHCP discover packet, the DHCP relay device sends the DHCP discover packet to the server device in a unicast manner.

Step 2: The server device sends a DHCP offer (DHCP offer) packet to the DHCP relay device in a unicast manner. After receiving the DHCP offer packet, the DHCP relay device forwards the DHCP offer packet to the client device in a broadcast manner.

Step 3: The client device sends a DHCP request (DHCP request) packet in a broadcast manner. After the DHCP relay device receives the DHCP request packet, the DHCP relay device sends the DHCP request packet to the server device in a unicast manner.

Step 4: After receiving the DHCP request packet, the server device sends a DHCP acknowledge (Acknowledge, ACK) packet or a DHCP negative acknowledge (DHCP negative acknowledgment, DHCP NAK) packet to the DHCP relay device in a unicast manner. After the DHCP relay device receives the DHCP ACK packet or the DHCP NAK packet, the DHCP relay device sends the DHCP ACK packet or the DHCP NAK packet to the client device in a broadcast manner.

The following describes a packet format of the DHCP packet.

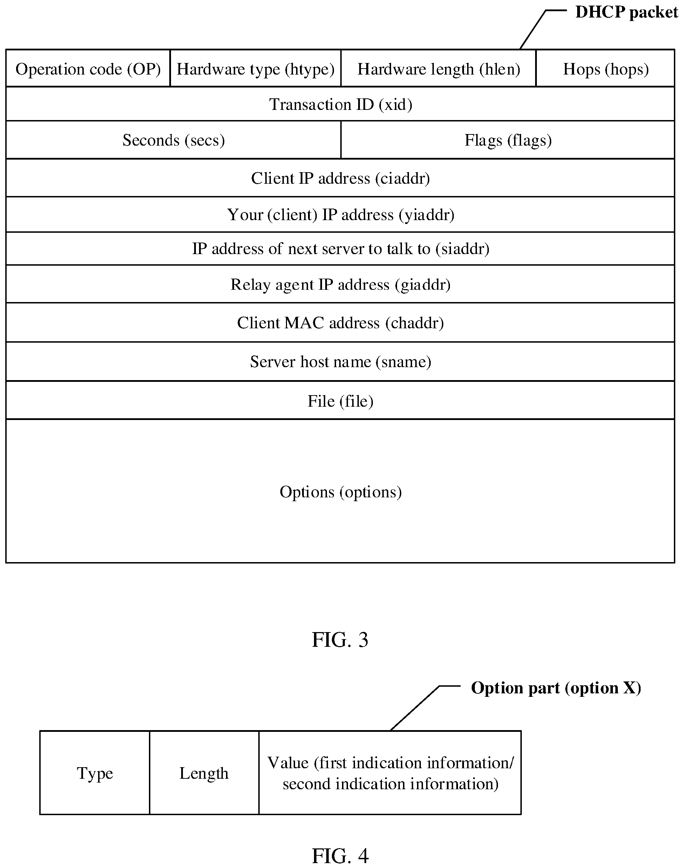

FIG. 3 shows an example of a packet format of a DHCP packet. Fields in FIG. 3 are described as follows:
A value of an operation code (operation code, OP) field is 1 or 2. When the value of the OP field is 1, it indicates that the DHCP packet is a request packet sent by the client device to the server device. When the value of the OP field is 2, it indicates that the DHCP packet is a response packet sent by the server device to the client device. A length of the OP field is 1 byte.

A hardware address type (hardware type, htype) field represents a network hardware address type of the client device. When a value of the htype field is 1, it indicates that network hardware of the client device is 10 megabits per second (Mb/s) Ethernet.

A hardware length (hardware length, hlen) field represents a network hardware address length of the client device. When a value of the hlen field is 6, it indicates that the network hardware address length of the client device is 6 bytes, that is, a 6-byte media access control (media access control, MAC) address of the Ethernet type. A length of the hlen field is 1 byte.

A hops field represents a quantity of DHCP relay devices through which the current DHCP packet passes. The hops field is incremented by 1 each time the DHCP packet passes through one DHCP relay device. The hops field is set to 0 by the client device, or may be set by a proxy server device. A length of the hops field is 1 byte.

A transaction ID (transaction ID, xid) field represents a random number selected by the client device. The xid field is used by the server device and the client device to exchange a request packet and a response packet between the server device and the client device. The client device uses the xid field to match the request packet against the response packet. The xid field is set by the client device and returned by the server device. The xid field is a 32-bit integer. A length of the xid field is 4 bytes.

A seconds (second, secs) field is filled by the client device. The secs field represents a quantity of seconds used since the client device starts to obtain an IP address or renew the IP address. A length of the secs field is 2 bytes.

A length of a flags (flags) field is 2 bytes (that is, 16 bits). In the 16 bits of the flags field, the most significant bit (that is, the leftmost bit) is currently used for DHCP, and the remaining 15 bits other than the most significant bit are all reserved fields. The most significant bit of the flags field is referred to as a unicast response flag bit or a broadcast response flag bit (broadcast flag). When a value of the most significant bit of the flags field is 0, it indicates that the client device requests the server device to send the response packet in a unicast manner. When the value of the most significant bit of the flags field is 1, it indicates that the client device requests the server device to send the response packet in a broadcast manner.

A client IP address (client IP address, ciaddr) field represents an IP address of the client device. When the client device is in a bound (bound) state, a renewal (renew) state, or a rebinding (rebinding) state, and the client device can respond to an address resolution protocol (address resolution protocol, ARP) request, the ciaddr field can be filled. A length of the ciaddr field is 4 bytes.

A Your (client) IP address (Your (client) IP address, yiaddr) field represents an IP address assigned by the server device to the client device. When the server device sends a DHCP response, the server device fills the IP address assigned to the client device in this field. A length of the yiaddr field is 4 bytes.

An IP address of next server to talk to (IP address of next server to talk to, siaddr) field represents an IP address of a server device to be used in a next phase of a DHCP process. A length of the siaddr field is 4 bytes.

A relay agent IP address (DHCP relay agent IP address, giaddr) field represents an IP address of a DHCP relay device. A length of the giaddr field is 4 bytes.

A client hardware address (client hardware address, chaddr) field represents a hardware address (for example, a MAC address) of the client device. The client device sets the chaddr field in the DHCP packet. An Ethernet frame header of a UDP packet also includes a hardware address of the client device. However, it is difficult to obtain the hardware address by checking the UDP packet to determine a field in the Ethernet frame header. By setting the chaddr field in the DHCP packet carried by UDP, the hardware address can be easily obtained from the chaddr field in a user process. A length of the chaddr field is 16 bytes.

A server host name (server host name, sname) field is an optional field. The sname field represents a host name of the server device. A value of the sname field is a null-terminated string. The sname field is filled by the server device. A length of the sname field is 64 bytes.

A file field represents a name of a boot file. Optionally, a value of the file field is a null-terminated string. A value of a file field in the DHCP discover packet is a "generic" name or an empty string. A value of a file field in the DHCP offer packet is a valid full name of a directory path.

An options (options) part is an optional parameter field in the DHCP packet. A format of the options part is type length value (type length value, TLV). The options part includes a type (type) field, a length (length) field, and a value (value) field. The type field includes an option number of the options part. The length field includes a length of the value field in the options part. A length of the options part is variable.

The options extended in DHCP in this embodiment are described below by using examples.

For example, an option that carries file-related information is referred to as option X. The following describes option X. Herein, X represents an option number (that is, a number of an option). X is a positive integer. For example, X is 211.

FIG. 4 shows an example of a format of option X. Optionally, option X shown in FIG. 4 is a newly added option in the DHCP packet. Option X includes a type field, a length field, and a value field.

For example, the value field in option X includes a startFilename (startFilename) field. The startFilename field is used to carry file information. A format of the startFilename field is shown in Table 1. For example, the startFilename field includes a file name of a target file. For example, the startFilename field includes V^{∗}R^{∗}C00_ATN.CC. For example, the startFilename field includes a file storage address of a target file. For example, the startFilename field includes CFARD*:\\V*R*COO_ATN.CC. For example, a value of the startFilename field is null (null).

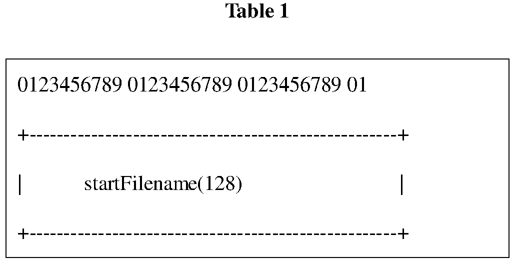

The type field in option X is used to identify that option X includes a file field, and the type field includes an option number of option X (that is, a value of X). For example, if a value of the type field in option X is 211, it indicates that information carried in the value field in option X is file information.

The foregoing describes the system architecture and the packet format in embodiments of this application by using examples. The following describes an example process of a file download method by using a method 200 and a method 300 based on the system architecture provided above.

The method 200 and the method 300 relate to a request packet and a response packet that are exchanged between a client device and a relay device, and further relate to a request packet and a response packet that are exchanged between the relay device and a server device. For distinguishing of description, in some of the following embodiments, the request packet sent by the client device is referred to as a first request packet, and the response packet sent by the relay device is referred to as a first response packet; and the request packet sent by the relay device is referred to as a second request packet, and the response packet sent by the server device is referred to as a second response packet.

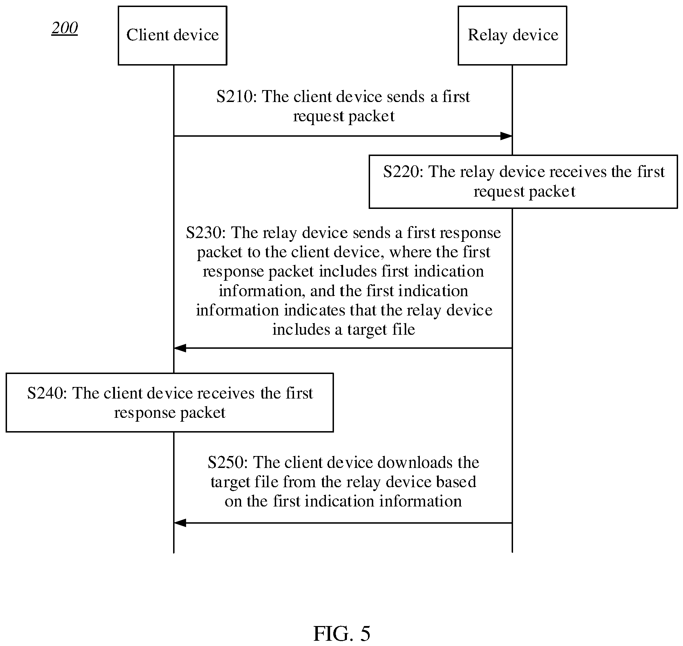

FIG. 5 is a flowchart of a file download method 200 according to an embodiment of this application. The method 200 is applied to a communications system including a client device, a relay device, and a server device. For example, the method 200 is applied to the system architecture 100. The server device in the method 200 is the server device 110, the relay device in the method 200 is the relay device 121, and the client device in the method 200 is the client device 131.

For example, the method 200 includes S210 to S250.

S210: The client device sends a first request packet.

S220: The relay device receives the first request packet sent by the client device.

S230: The relay device sends a first response packet to the client device.

The first response packet is a response to the first request packet. The first response packet includes first indication information, and the first indication information indicates that the relay device includes a target file.

Specific content of the first indication information includes a plurality of cases. The following describes the first indication information by using examples with reference to Case A and Case B.

Case A: The response packet sent by the relay device includes specific file information.

For example, the first indication information includes first information of the target file. The first information of the target file includes one or more of the following: a file name, a version number, a file type, and a file storage address. For example, the file storage address is used to indicate a location at which the target file is stored in the relay device. For example, the file storage address is a storage path of the target file in the relay device. For example, the file storage address is an FTP directory or an SFTP directory. For example, the file storage address is CFARD^{∗}:\\V^{∗}R^{∗}C00_ATN.CC. For another example, the file storage address is a logical address or a physical address of the target file in the relay device.

Case B: The response packet sent by the relay device includes an identifier indicating existence of a file.

For example, the first indication information includes a first existence identifier. The first existence identifier is used to indicate that the relay device includes the target file.

A form of the first existence identifier is not limited in this embodiment. For example, the first existence identifier is a preset string. A meaning of the preset string is that the relay device has the target file, and the client device can download the target file from the relay device. For example, the first existence identifier is "yes" or "OK". For another example, a format of the first existence identifier meets a preset format. For example, the first existence identifier is a combination of a number, a letter, and a symbol. For example, the first m digits of the first existence identifier are all numbers, and the last n digits of the first existence identifier are all letters. Herein, m and n are positive integers. The relay device adds the first indication information to the response packet, to indicate, by using the response packet, that the target file exists on the relay device, so that the client device performs a subsequent file download process based on the first indication information.

For example, the first request packet includes second indication information, and the second indication information indicates that the client device requests the target file. Specific content of the second indication information includes a plurality of cases. The following describes the second indication information by using examples with reference to Case 1 and Case 2.

Case 1: The request packet sent by the client device includes specific file information.

Case 1 is applicable to a scenario in which the client specifies a file by using the request packet. For example, the second indication information includes one or more of the following: a file name of the target file, a version number of the target file, and a file type of the target file. For example, the file name of the target file is V^{∗}R^{∗}C00_ATN.CC. The file type of the target file is system software (for example, a file in a *.CC format), a patch file (for example, a file in a *.PAT format), a multimedia file (for example, an audio file, a video file, or an image file), or the like. Based on the manner described in Case 1, the client device adds specific file information to the request packet, to specify, by using the request packet, a specific file that needs to be downloaded, so that the relay device or the server device can clearly query, based on the file information, whether the file required by the client device exists locally. This helps simplify processing logic of the relay device or the server device, and helps a file subsequently provided by the relay device or the server device more accurately meet a requirement of the client device.

Case 2: The request packet sent by the client device includes an identifier of a requested file.

Case 2 is applicable to a scenario in which the client does not specify a file by using the request packet. For example, the second indication information includes a first request identifier, and the first request identifier is used to indicate that the client device requests a file.

A form of the first request identifier is not limited in this embodiment. For example, the first request identifier is null. For another example, the first request identifier is a preset string. For another example, a format of the first request identifier meets a preset format. For example, the first request identifier is a combination of a number, a letter, and a symbol. For example, the first m digits of the first request identifier are all numbers, and the last n digits of the first request identifier are all letters. Herein, m and n are positive integers.

The second indication information may be the same as or different from the first indication information. For example, the first indication information is a file storage address of the target file. The second indication information is a file name of the target file.

The second indication information described above is an optional feature of the first request packet. For another example, the first request packet does not include the second indication information. For example, in a scenario in which the relay device or the server device controls file transfer to the client device, the relay device indicates the target file by using the response packet (the first response packet), and the client device does not need to add file-related information to the request packet.

For example, when the first request packet includes the second indication information, the relay device sends the first response packet described above to the client device based on the second indication information carried in the first request packet. Case 1 related to the second indication information and Case 2 related to the second indication information may be randomly combined with Case A related to the first indication information and Case B related to the first indication information. Specifically, when the request packet sent by the client device includes the specific file information, the response packet sent by the relay device optionally includes the specific file information, or includes the identifier indicating existence of the file. When the request packet sent by the client device includes the identifier of the requested file, the response packet sent by the relay device optionally includes the specific file information, or includes the identifier indicating existence of the file. The following describes, by using examples, specific implementations of solutions used during combination of indication information in various different cases. With reference to Case 1 related to the second indication information and Case A related to the first indication information, the relay device determines the first information of the target file based on the file name of the target file, the version number of the target file, and the file type of the target file that are carried in the first request packet. The relay device generates the first response packet based on the first information of the target file. For example, the first request packet carries the file name of the target file. The relay device stores a correspondence between the file name and the file storage address. The relay device queries the correspondence between the file name and the file storage address based on the file name carried in the first request packet, to obtain the file storage address of the target file. The relay device adds the file storage address of the target file to the response packet, to obtain the first response packet including the file storage address.

With reference to Case 1 related to the second indication information and Case B related to the first indication information, the relay device determines, based on the file name of the target file, the version number of the target file, and the file type of the target file that are carried in the first request packet, whether the relay device locally stores the target file. If the relay device locally stores the target file, the relay device adds the first existence identifier to the response packet, to obtain the first response packet including the first existence identifier.

With reference to Case 2 related to the second indication information and Case A related to the second indication information, the relay device determines whether the first request packet carries the first request identifier. If the first request packet carries the first request identifier, the relay device determines the target file required by the client device. The relay device generates the first response packet based on the first information of the target file, to obtain the first response packet including the first information of the target file.

With reference to Case 2 related to the second indication information and Case B related to the second indication information, the relay device determines whether the first request packet carries the first request identifier. If the first request packet carries the first request identifier, the relay device determines the target file required by the client device. The relay device determines whether the relay device locally stores the target file. If the relay device locally stores the target file, the relay device adds the first existence identifier to the response packet, to obtain the first response packet including the first existence identifier.

When the relay device determines the target file required by the client device, a manner in which the relay device determines the target file is not limited in this embodiment. For example, the relay device determines the target file based on a type of the client device, where a type of the target file and the type of the client device meet a match condition. The type of the client device is, for example, represented by using a device model of the client device, an IP address of the client device, a system version of the client device, or other information. For example, if the relay device finds that the device model of the client device is V1R1C00_ATC, the relay device determines that a file that meets a match condition with V1R1C00_ATC is V1R2C00_ATN.cc. In this example, V1R2C00_ATN.cc is the target file that matches the type of the client. For another example, the relay device stores a correspondence between an IP address range and a file type. The relay device determines an IP address range to which the IP address of the client device belongs, and determines, based on the prestored correspondence, a file type corresponding to the IP address range, to find the target file of the file type.

The relay device determines the type of the client device in a plurality of manners. For example, the first request packet includes the type of the client device. For example, the type of the client device and the first request identifier are carried in a same first request packet. For example, a value field of option X in the request packet includes both the request identifier and the type of the client device. In this manner, when requesting to download a file, the client device adds the type of the client device to the request packet, so that the relay device can select a file that can be transferred to the client device. For another example, the relay device preconfigures a type of each client device connected to the relay device. For another example, the relay device determines the type of the client device based on a message sent by the server device.

In addition, Case A related to the first indication information or Case B related to the first indication information may be randomly combined with a case in which the first request packet does not include the second indication information. For example, when the first request packet does not include the second indication information, after the relay device receives the first request packet, the relay device determines whether the target file needs to be provided for the client device. If the relay device determines that the target file needs to be transferred to the client device, the relay device generates the first response packet based on the first information of the target file. For example, the relay device determines, based on a device model of the client device, an IP address of the client device, a system version of the client device, or other information, whether the target file needs to be provided for the client device. For example, in a batch upgrade scenario, a MAC address range is preconfigured, to specify that each client device in the MAC address range needs to be upgraded. After the relay device receives the first request packet, if the relay device finds that a source MAC address in the first request packet falls within the specified MAC address range, the relay device determines that the target file required for upgrade needs to be transferred to the client device.

For example, after receiving the first response packet, the client device first verifies, through type match, whether a file indicated by the first response packet is a file required by the client. If the file indicated by the first response packet is the file required by the client, the client device performs a file download action. If the file indicated by the first response packet is not the file required by the client, the client device cancels the file download action. For example, the first indication information includes the file type of the target file. The client device determines whether the type of the target file and the type of the client device meet the match condition. If the client device determines that the type of the target file and the type of the client device meet the match condition, the client device downloads the target file from the relay device based on the first indication information.

Specific protocol packets used to implement the first request packet and the first response packet are not limited in this embodiment. For example, the first request packet is one of the following protocol packets: a DHCP packet, a RADIUS packet, or a PPPoE packet. Correspondingly, the first response packet is a protocol packet that is consistent with the first request packet and that is in the following protocol packets. The following describes, by using examples, the first request packet and the first response packet by using Scenario 1 to Scenario 3 with reference to a specific protocol type.

Scenario 1: A method process of the method 200 is implemented by using DHCP.

The first request packet is implemented by using a DHCP packet. The first request packet is specifically a request packet in DHCP. The first response packet is implemented by using a DHCP packet. The first response packet is specifically a response packet in DHCP. For example, the first request packet is a DHCP discover packet, and the first response packet is a DHCP offer packet. For another example, the first request packet is a DHCP request packet, and the first response packet is a DHCP ACK packet.

Scenario 1 can be implemented based on a three-layer system architecture in DHCP. Specifically, the three-layer system architecture in DHCP includes a DHCP server device, a DHCP relay device, and a DHCP client device. In this embodiment, the server device is a DHCP server device. The relay device is a DHCP relay device, and the client device is a DHCP client device.

According to the features described in Scenario 1, this embodiment supports smooth integration of a file download process with DHCP, to facilitate reuse of the system architecture in DHCP and a communication process implementation solution. This reduces solution implementation complexity and configuration complexity, and improves solution availability.

Scenario 2: A method process of the method 200 is implemented by using RADIUS.

The first request packet is implemented by using a RADIUS packet. The first request packet is specifically a request packet in RADIUS. The first response packet is implemented by using a RADIUS packet. The first response packet is specifically a response packet in RADIUS. For example, the first request packet is a RADIUS access-request (access-request) packet, and the first response packet is a RADIUS access-accept (access-accept) packet. For another example, the first request packet is a RADIUS accounting-request (accounting-request) packet, and the first response packet is a RADIUS accounting-response (accounting-response) packet.

Scenario 2 can be implemented based on a three-layer system architecture in RADIUS. Specifically, the three-layer system architecture in RADIUS includes a RADIUS server device, a RADIUS relay device, and a RADIUS client device. In this embodiment, the server device is a RADIUS server device. The relay device is a RADIUS relay device, and the client device is a RADIUS client device.

According to the features described in Scenario 2, this embodiment supports smooth integration of a file download process with RADIUS, to facilitate reuse of the system architecture in RADIUS and a communication process implementation solution. This reduces solution implementation complexity and configuration complexity, and improves solution availability.

Scenario 3: A method process of the method 200 is implemented by using PPPoE.

The first request packet is implemented by using a PPPoE packet. The first request packet is specifically a request packet in PPPoE. The first response packet is implemented by using a PPPoE packet. The first response packet is specifically a response packet in PPPoE. For example, the first request packet is a PPPoE active discovery initiation (PPPoE Active Discovery Initiation, PADI) packet, and the first response packet is a PPPoE active discovery offer (PPPoE Active Discovery Offer, PADO) packet. For another example, the first request packet is a PPPoE active discovery request (PPPoE Active Discovery Request, PADR) packet, and the first response packet is a PPPoE active discovery session-confirmation (PPPoE Active Discovery Session-confirmation, PADS) packet.

Scenario 3 can be implemented based on a three-layer system architecture in PPPoE. Specifically, the three-layer system architecture in PPPoE includes a PPPoE server device, a PPPoE relay device, and a PPPoE client device. In this embodiment, the server device is a PPPoE server device. The relay device is a PPPoE relay device, and the client device is a PPPoE client device.

According to the features described in Scenario 3, this embodiment supports smooth integration of a file download process with PPPoE, to facilitate reuse of the system architecture in PPPoE and a communication process implementation solution. This reduces solution implementation complexity and configuration complexity, and improves solution availability.

A location at which the first indication information is carried in the first response packet is not limited in this embodiment. For example, a new type of option is added to carry the first indication information. Specifically, the first response packet includes a first option part, the first option part includes a type field and a value field, the value field includes the first indication information, and the type field is used to identify that the first option part includes the first indication information. For example, the first option part further includes a length field. The length field is used to identify a length of the value field. For example, the first option part is option X described above. The type field included in the first option part is the type field in option X. The value field in the first option part is the startFilename field shown in Table 1. With reference to Scenario 1, the first option part is, for example, a newly added option in the DHCP packet. With reference to Scenario 2, the first option part is, for example, a newly added option in the RADIUS packet. With reference to Scenario 3, the first option part is, for example, a newly added option in the PPPoE packet.

A location at which the second indication information is carried in the first request packet is not limited in this embodiment. For example, a new type of option is added to carry the second indication information. Specifically, the first request packet includes a second option part, the second option part includes a type field and a value field, the value field includes the second indication information, and the type field is used to identify that the second option part includes the second indication information. For example, the second option part further includes a length field. The length field is used to identify a length of the value field. For example, the second option part is option X described above. The type field included in the second option part is the type field in option X. The value field in the second option part is the startFilename field shown in Table 1. With reference to Scenario 1, the second option part is, for example, a newly added option in the DHCP packet. With reference to Scenario 2, the second option part is, for example, a newly added option in the RADIUS packet. With reference to Scenario 3, the second option part is, for example, a newly added option in the PPPoE packet.

S240: The client device receives the first response packet sent by the relay device.

S250: The client device downloads the target file from the relay device based on the first indication information. There are a plurality of implementations in which the client device downloads a file by using indication information carried in the response packet. The following provides description by using examples with reference to Implementation a and Implementation b.

Implementation a: The client device downloads the file from a storage address carried in the response packet. Implementation a is applicable to a case in which the first information includes the file storage address in Case A. Specifically, the client device obtains the file storage address of the target file from the first response packet, and downloads the target file based on the file storage address of the target file.

In Implementation a, the client device can directly obtain the file storage address from the response packet, to reduce configuration complexity of the client device and the relay device, and improve file download efficiency. Implementation b: The client device downloads the file from a default address.

Implementation b is applicable to Case B and a case in which the first information includes the file name, the version number, and the file type in Case A. Specifically, the client device stores the default address. After receiving the first response packet, the client device determines whether the first response packet includes the first existence identifier. In response to the fact that the first response packet includes the first existence identifier, the client device downloads the file from the default address.

A manner in which the client device obtains the default address is not limited in this embodiment. For example, the client device obtains the default address by negotiating with the relay device in advance. For example, the relay device pre-assigns a segment of storage space used to store a file, uses an address of the storage space as a default address, and notifies the client device of the default address in a negotiation phase. The client device receives and stores the default address. Each time the client device needs to download a file, the client device downloads the required file from the default address. For another example, the client device and the relay device obtain the default address through static configuration. For example, network management personnel separately perform a configuration operation on the client device and the relay device to configure the default address. For another example, the client device stores a correspondence between the default address and the file name, the version number, or the file type. After the client device receives the first response packet, the client device obtains the file name, the version number, or the file type from the first response packet. The client device queries the correspondence based on the file name, the version number, or the file type, to obtain the default address corresponding to the file name, the version number, or the file type. The foregoing describes, by using Implementation a and Implementation b, two implementations in which the client device downloads the file from the relay device. Optionally, the foregoing file download process is implemented based on a file transfer protocol. The file transfer protocol includes but is not limited to FTP or SFTP. For example, the client device generates an FTP request or an SFTP request, and sends the FTP request or the SFTP request to the relay device. The relay device sends a file to the client device in response to the FTP request or the SFTP request based on FTP or SFTP. With reference to Implementation a, the FTP request or the SFTP request sent by the client device carries, for example, the storage address carried in the response packet. For example, the FTP request or the SFTP request sent by the client device carries the file storage address of the target file. With reference to Implementation b, the FTP request or the SFTP request sent by the client device carries, for example, the default address.

A manner in which the client device applies the downloaded file is not limited in this embodiment. For example, when the file is applied to a device upgrade scenario, the target file is system software, and the client device performs upgrade based on the system software. For another example, when the file is applied to a scenario in which a patch is installed on a device, the target file is a patch file, and the client device loads the patch based on the patch file.

In the method provided in this embodiment, in the three-layer system architecture including the client device, the relay device, and the server device, a packet transmitted between the client device and the relay device is used to indicate that the relay device has a file required by the client. The client device can download the file from the relay device by interacting with the relay device, so that the file can be downloaded nearby. This reduces bandwidth occupied for file transfer.

In the method 200, the relay device transfers the target file to the client device in response to the first response packet, so that the client device obtains the target file from the relay device.

A moment at which the relay device obtains the target file required by the client is not limited in this embodiment. For example, the relay device obtains the target file after the client initiates a request. For example, after the relay device receives the first request packet, the relay device determines whether the relay device locally stores the target file. If the relay device does not locally store the target file, the relay device downloads the target file, and then sends the downloaded target file to the client. For another example, the relay device has obtained the target file before the client initiates a request. For example, the relay device downloads at least one file in advance, and locally stores the at least one file. After the relay device receives the first request packet, the relay device determines, from the at least one locally stored file, the target file required by the client, and sends the target file to the client.

A manner in which the relay device obtains the target file is not limited in this embodiment. For example, the target file is obtained by the relay device from the server device. With reference to the method 300, the following describes, by using examples, a specific manner in which the relay device obtains the file from the server device.

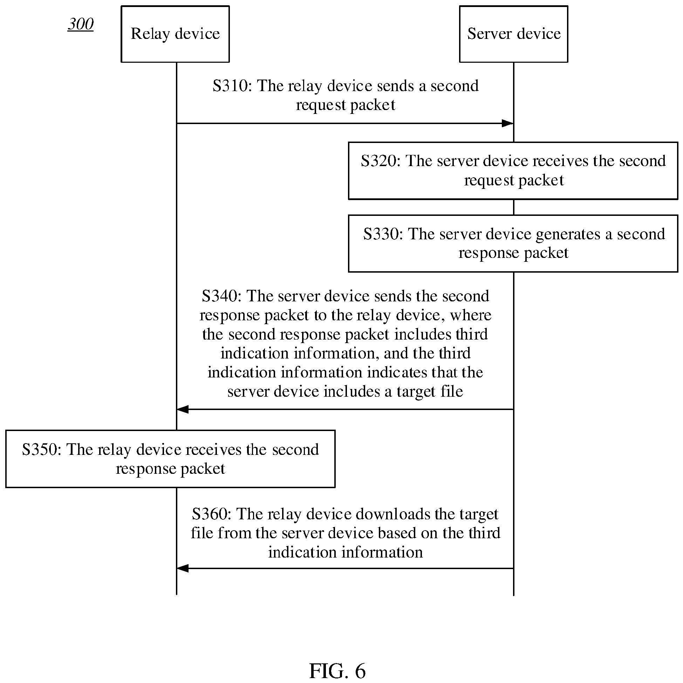

FIG. 6 is a flowchart of a file download method 300 according to an embodiment of this application. The method 300 is applied to a communications system including a client device, a relay device, and a server device. For example, the method 300 is applied to the system architecture 100. The server device in the method 300 is the server device 110, the relay device in the method 300 is the relay device 121, and the client device in the method 300 is the client device 131.

For example, the method 300 includes S310 to S360.

S310: The relay device sends a second request packet.

S320: The server device receives the second request packet sent by the relay device.

S330: The server device generates a second response packet. The second response packet is a response to the second request packet. The second response packet includes third indication information, and the third indication information indicates that the server device includes a target file.

S340: The server device sends the second response packet to the relay device. The second response packet is the response to the second request packet. The second response packet includes the third indication information, and the third indication information indicates that the server device includes the target file.

Specific content of the third indication information includes a plurality of cases. The following describes the third indication information by using examples with reference to Case A and Case B.

Case A: The response packet sent by the server device includes specific file information.

For example, the third indication information includes second information of the target file. The second information of the target file includes one or more of the following: a file name, a version number, a file type, and a file storage address. For example, the file storage address is used to indicate a location at which the target file is stored in the server device. For example, the file storage address is a storage path of the target file in the server device. For example, the file storage address is an FTP directory or an SFTP directory. For example, the file storage address is CFARD^{∗}:\\V^{∗}R^{∗}C00_ATN.CC. For another example, the file storage address is a logical address or a physical address of the target file in the server device.

Case B: The response packet sent by the server device includes an identifier indicating existence of a file.

For example, the third indication information includes a second existence identifier. The second existence identifier is used to indicate that the server device includes the target file.

A form of the second existence identifier is not limited in this embodiment. For example, the second existence identifier is a preset string. A meaning of the preset string is that the server device has the target file, and the relay device can download the target file from the server device. For example, the second existence identifier is "yes" or "OK". For another example, a format of the second existence identifier meets a preset format. For example, the second existence identifier is a combination of a number, a letter, and a symbol. For example, the first m digits of the second existence identifier are all numbers, and the last n digits of the second existence identifier are all letters. Herein, m and n are positive integers.

The server device adds the third indication information to the response packet, to indicate, by using the response packet, that the target file exists on the server device, so that the relay device performs a subsequent file download process based on the third indication information.

For example, the second request packet includes fourth indication information, and the fourth indication information indicates that the relay device requests the target file. Specific content of the fourth indication information includes a plurality of cases. The following describes the fourth indication information by using examples with reference to Case 1 and Case 2.

Case 1: The request packet sent by the relay device includes specific file information.

For example, the fourth indication information includes one or more of the following: a file name of the target file, a version number of the target file, and a file type of the target file.

Optionally, the fourth indication information is the same as the second indication information. For example, the fourth indication information and the second indication information each are the file name of the target file. Alternatively, the fourth indication information and the second indication information are different information of a same target file. For example, the second indication information is the file type of the target file, and the fourth indication information is the file name of the target file. For example, after the relay device receives the first request packet, the relay device queries a correspondence between the file type and the file name based on the file type carried in the first request packet, and adds the file name corresponding to the file type to the second request packet.

Case 2: The request packet sent by the relay device includes an identifier of a requested file.

For example, the fourth indication information includes a second request identifier, and the second request identifier is used to indicate that the relay device requests a file.

A form of the second request identifier is not limited in this embodiment. For example, the second request identifier is null. For another example, the second request identifier is a preset string. For another example, a format of the second request identifier meets a preset format. For example, the second request identifier is a combination of a number, a letter, and a symbol. For example, the first m digits of the second request identifier are all numbers, and the last n digits of the second request identifier are all letters. Herein, m and n are positive integers.

The fourth indication information described above is an optional feature of the second request packet. For another example, the second request packet does not include the fourth indication information.

For example, when the second request packet includes the fourth indication information, the server device sends the second response packet described above to the relay device based on the fourth indication information carried in the second request packet. Case 1 related to the fourth indication information and Case 2 related to the fourth indication information may be randomly combined with Case A related to the third indication information and Case B related to the third indication information. Specifically, when the request packet sent by the relay device includes the specific file information, the response packet sent by the server device optionally includes the specific file information, or includes the identifier indicating existence of the file. When the request packet sent by the relay device includes the identifier of the requested file, the response packet sent by the server device optionally includes the specific file information, or includes the identifier indicating existence of the file. The following describes, by using examples, specific implementations of solutions used during combination of indication information in various different cases. With reference to Case 1 related to the fourth indication information and Case A related to the third indication information, the server device determines the second information of the target file based on the file name of the target file, the version number of the target file, and the file type of the target file that are carried in the second request packet. The server device generates the second response packet based on the second information of the target file. For example, the second request packet carries the file name of the target file. The server device stores a correspondence between the file name and the file storage address. The server device queries the correspondence between the file name and the file storage address based on the file name carried in the second request packet, to obtain the file storage address of the target file. The server device adds the file storage address of the target file to the response packet, to obtain the second response packet including the file storage address.

With reference to Case 1 related to the fourth indication information and Case B related to the third indication information, the server device determines, based on the file name of the target file, the version number of the target file, and the file type of the target file that are carried in the second request packet, whether the server device locally stores the target file. If the server device locally stores the target file, the server device adds the second existence identifier to the response packet, to obtain the second response packet including the second existence identifier. With reference to Case 2 related to the fourth indication information and Case A related to the fourth indication information, the server device determines whether the second request packet carries the second request identifier. If the second request packet carries the second request identifier, the server device determines the target file required by the relay device. The server device generates the second response packet based on the second information of the target file, to obtain the second response packet including the second information of the target file.

With reference to Case 2 related to the fourth indication information and Case B related to the fourth indication information, the server device determines whether the second request packet carries the second request identifier. If the second request packet carries the second request identifier, the server device determines the target file required by the relay device. The server device determines whether the server device locally stores the target file. If the server device locally stores the target file, the server device adds the second existence identifier to the response packet, to obtain the second response packet including the second existence identifier.

When the server device determines the target file required by the client device, a manner in which the server device determines the target file is not limited in this embodiment. For example, the server device determines the target file based on a type of the client device, where a type of the target file and the type of the client device meet a match condition. The type of the client device is, for example, represented by using a device model of the client device, an IP address of the client device, a system version of the client device, or other information. For example, if the server device finds that the device model of the client device is V1R1C00_ATC, the server device determines that a file that meets a match condition with V1R1C00_ATC is V1R2C00_ATN.cc. In this example, V1R2C00_ATN.cc is the target file that matches the type of the client. For another example, the server device stores a correspondence between an IP address range and a file type. The server device determines an IP address range to which the IP address of the client device belongs, and determines, based on the prestored correspondence, a file type corresponding to the IP address range, to find the target file of the file type.

The server device determines the type of the client device in a plurality of manners. For example, the second request packet includes the type of the client device. For example, the type of the client device and the second request identifier are carried in a same second request packet. For example, a value field of option X in the request packet includes both the request identifier and the type of the client device. In this manner, when requesting to download a file, the relay device adds the type of the client device to the request packet, so that the server device can select a file that can be transferred to the client device. For another example, the server device preconfigures a type of each client device. For another example, the server device determines the type of the client device based on a message sent by the relay device. In addition, Case A related to the third indication information or Case B related to the third indication information may be randomly combined with a case in which the second request packet does not include the fourth indication information. For example, when the second request packet does not include the fourth indication information, after the server device receives the second request packet, the server device determines whether the target file needs to be provided for the relay device. If the server device determines that the target file needs to be transferred to the relay device, the server device generates the second response packet based on the second information of the target file. For example, the server device determines, based on a device model of the client device, an IP address of the client device, a system version of the client device, or other information, whether the target file needs to be provided for the client device.

Specific protocol packets used to implement the second request packet and the second response packet are not limited in this embodiment. For example, the second request packet is one of the following protocol packets: a DHCP packet, a RADIUS packet, or a PPPoE packet. The second response packet is a protocol packet consistent with the second request packet. The following describes, by using examples, the second request packet and the second response packet by using Scenario 1 to Scenario 3 with reference to a specific protocol type.

Scenario 1: A method process of the method 300 is implemented by using DHCP.

The second request packet is implemented by using a DHCP packet. The second request packet is specifically a request packet in DHCP. The second response packet is implemented by using a DHCP packet. The second response packet is specifically a response packet in DHCP. For example, the second request packet is a DHCP discover packet, and the second response packet is a DHCP offer packet. For another example, the second request packet is a DHCP request packet, and the second response packet is a DHCP ACK packet.

Scenario 2: A method process of the method 300 is implemented by using RADIUS.

The second request packet is implemented by using a RADIUS packet. The second request packet is specifically a request packet in RADIUS. The second response packet is implemented by using a RADIUS packet. The second response packet is specifically a response packet in RADIUS. For example, the second request packet is a RADIUS access-request packet, and the second response packet is a RADIUS access-accept packet. For another example, the second request packet is a RADIUS accounting-request packet, and the second response packet is a RADIUS accounting-response packet.

Scenario 3: A method process of the method 300 is implemented by using PPPoE.

The second request packet is implemented by using a PPPoE packet. The second request packet is specifically a request packet in PPPoE. The second response packet is implemented by using a PPPoE packet. The second response packet is specifically a response packet in PPPoE. For example, the second request packet is a PADI packet, and the second response packet is a PADO packet. For another example, the second request packet is a PADR packet, and the second response packet is a PADS packet.

A location at which the third indication information is carried in the second response packet is not limited in this embodiment. For example, a new type of option is added to carry the third indication information. Specifically, the second response packet includes a third option part, the third option part includes a type field and a value field, the value field includes the third indication information, and the type field is used to identify that the third option part includes the third indication information. For example, the third option part further includes a length field. The length field is used to identify a length of the value field. For example, the third option part is option X described above. The type field included in the third option part is the type field in option X. The value field in the third option part is the startFilename field shown in Table 1. With reference to Scenario 1, the third option part is, for example, a newly added option in the DHCP packet. With reference to Scenario 2, the third option part is, for example, a newly added option in the RADIUS packet. With reference to Scenario 3, the third option part is, for example, a newly added option in the PPPoE packet.

A location at which the fourth indication information is carried in the second request packet is not limited in this embodiment. For example, a new type of option is added to carry the fourth indication information. Specifically, the second request packet includes a fourth option part, the fourth option part includes a type field and a value field, the value field includes the fourth indication information, and the type field is used to identify that the fourth option part includes the fourth indication information. For example, the fourth option part further includes a length field. The length field is used to identify a length of the value field. For example, the fourth option part is option X described above. The type field included in the fourth option part is the type field in option X. The value field in the fourth option part is the startFilename field shown in Table 1. With reference to Scenario 1, the fourth option part is, for example, a newly added option in the DHCP packet. With reference to Scenario 2, the fourth option part is, for example, a newly added option in the RADIUS packet. With reference to Scenario 3, the fourth option part is, for example, a newly added option in the PPPoE packet.

S350: The relay device receives the second response packet sent by the server device.

S360: The relay device downloads the target file from the server device based on the third indication information. There are a plurality of implementations in which the relay device downloads a file by using indication information carried in the response packet. The following provides description by using examples with reference to Implementation a and Implementation b.

Implementation a: The relay device downloads the file from a storage address carried in the response packet. Implementation a is applicable to a case in which the second information includes the file storage address in Case A. Specifically, the relay device obtains the file storage address of the target file from the second response packet, and downloads the target file based on the file storage address of the target file.

In Implementation a, the relay device can directly obtain the file storage address from the response packet, to reduce configuration complexity of the relay device and the server device, and improve file download efficiency. Implementation b: The relay device downloads the file from a default address.

Implementation b is applicable to Case B and a case in which the second information includes the file name, the version number, and the file type in Case A. Specifically, the relay device stores the default address. After receiving the second response packet, the relay device determines whether the second response packet includes the second existence identifier. In response to the fact that the second response packet includes the second existence identifier, the relay device downloads the file from the default address.

A manner in which the relay device obtains the default address is not limited in this embodiment. For example, the relay device obtains the default address by negotiating with the server device in advance. For example, the server device pre-assigns a segment of storage space used to store a file, uses an address of the storage space as a default address, and notifies the relay device of the default address in a negotiation phase. The relay device receives and stores the default address. Each time the relay device needs to download a file, the relay device downloads the required file from the default address. For another example, the relay device and the server device obtain the default address through static configuration. For example, network management personnel separately perform a configuration operation on the relay device and the server device to configure the default address. For another example, the relay device stores a correspondence between the default address and the file name, the version number, or the file type. After the relay device receives the second response packet, the relay device obtains the file name, the version number, or the file type from the second response packet. The relay device queries the correspondence based on the file name, the version number, or the file type, to obtain the default address corresponding to the file name, the version number, or the file type.

The foregoing describes, by using Implementation a and Implementation b, two implementations in which the relay device downloads the file from the server device. Optionally, the foregoing file download process is implemented based on a file transfer protocol. The file transfer protocol includes but is not limited to FTP or SFTP. For example, the relay device generates an FTP request or an SFTP request, and sends the FTP request or the SFTP request to the server device. The server device sends a file to the relay device in response to the FTP request or the SFTP request based on FTP or SFTP. With reference to Implementation a, the FTP request or the SFTP request sent by the relay device carries, for example, the storage address carried in the response packet. For example, the FTP request or the SFTP request sent by the relay device carries the file storage address of the target file. With reference to Implementation b, the FTP request or the SFTP request sent by the relay device carries, for example, the default address.

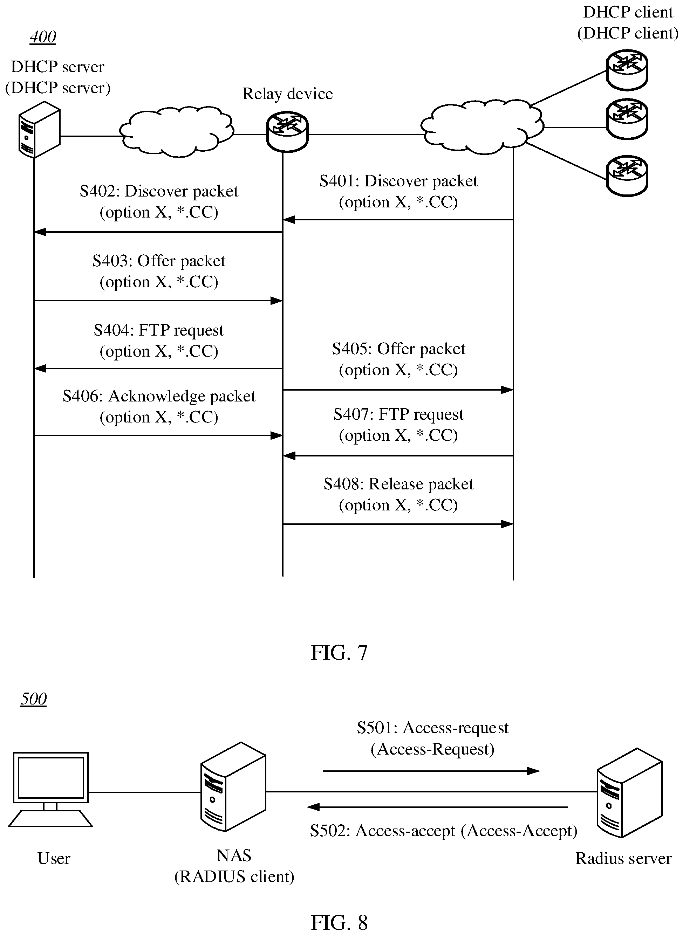

The following further describes the method 200 and the method 300 by using a method 400 shown in FIG. 7. In the method 400, interaction between a client device, a relay device, and a server device belongs to an interaction process performed when a DHCP client accesses a network in a relay deployment scenario. A packet exchanged between the client device, the relay device, and the server device is a DHCP packet, an option part carrying file information is option X, and a file downloaded by the client is a *.CC file. In other words, the method 400 is related to a manner in which the client device, the relay device, and the server device download the *.CC file by adding option X to the DHCP packet.

For example, the method 400 includes steps S401 to S408.

S401: The client device sends a DHCP discover packet. The DHCP discover packet sent by the client device carries option X, and option X carries file information of the *.CC file. For example, option X carries a file name.

S402: After the relay device receives the DHCP discover packet sent by the client, the relay device sends the DHCP discover packet to the server device. The DHCP discover packet sent by the relay device carries option X, and option X carries the file information of the *.CC file. For example, option X carries the file name.

S403: The server device sends a DHCP offer packet to the relay device. The DHCP offer packet sent by the server device carries option X, and option X carries a file storage address of the *.CC file.

S404: After the relay device receives the DHCP offer packet, the relay device sends an FTP request to the server device, where the FTP request carries the file storage address of the *.CC file.

S405: The relay device sends the DHCP offer packet to the client device. The DHCP offer packet sent by the relay device carries option X, and option X carries the file storage address of the *.CC file.

S406: The server device sends a DHCP ACK packet to the relay device. The DHCP ACK packet carries option X, and option X carries a storage address of the *.CC file.

S407: After the client device receives the DHCP offer packet, the client device sends an FTP request to the relay device, where the FTP request carries the storage address of the *.CC file.

S408: The relay device sends a DHCP release packet to the client device. The DHCP release packet sent by the relay device carries option X.

According to the method 400, files can be transferred to devices in batches more quickly and efficiently on a complex network, and a network upgrade speed can be accelerated. In addition, through nearby download, problems such as bandwidth occupation caused by the network upgrade and a transmission failure caused by network instability can be avoided.

The following further describes the method 200 by using a method 500 shown in FIG. 8. In the method 500, a packet exchanged between a client device, a relay device, and a server device is a RADIUS packet.

For example, the method 500 includes steps S501 and S502.

S501: The client device sends a RADIUS access-request packet. The RADIUS access-request packet sent by the client device carries a file name of a target file or is null.

S502: The relay device receives the RADIUS access-request packet. The relay device sends a RADIUS access-accept packet to the client device, where the RADIUS access-accept packet carries a file storage address of the target file. The following describes an example of a format of the RADIUS packet.

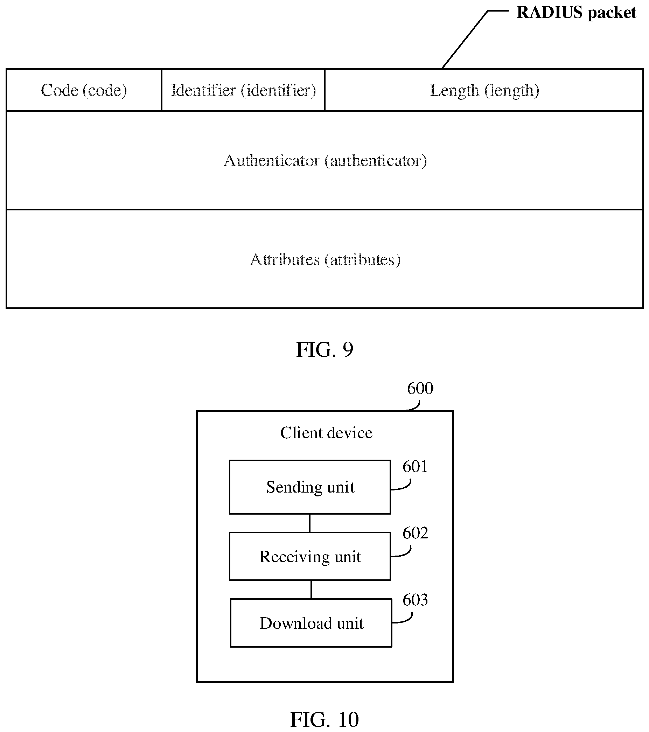

FIG. 9 shows an example of a RADIUS packet. The RADIUS packet includes five fields: a code (code) field, an identifier (identifier, ID) field, a length (length) field, an authenticator (authenticator) field, and an attributes (attributes) field. The fields other than the attributes field each have a fixed length.

The code field is used to distinguish between RADIUS packet types. Common RADIUS packet types are 1, 2, and 3. For a specific meaning of the code field, refer to Table 2.

**Table 2**

| Code value | Name (Name) | Packet type |
|---|---|---|
| 1 | Access-Request | Access-request packet |
| 2 | Access-Accept | Access-accept packet |
| 3 | Access-Reject | Access-reject packet |
| 4 | Accounting-Request | Accounting-request packet |
| 5 | Accounting-Response | Accounting-response packet |
| 11 | Access-Challenge | Access-challenge packet |
| 12 | Status-Server(experimental) | Status-server packet (experimental) |
| 13 | Status-Client(experimental) | Status-client packet (experimental) |
| 255 | Reserved | Reserved |

The identifier field is used to match request and response packets against each other, that is, to distinguish between numbers of all groups of request and response packets.

The length field is used to record a length of an entire data packet. The code field, the identifier field, the length field, and the authenticator field each have a fixed length. The packet has a minimum length of 20 bytes and a maximum length of 4096 bytes. If the length of the packet is less than a length value of the length field, the packet is discarded. There are two types of authenticator fields. The first type is a 16-byte random number RequestAuth generated by the access-request packet. The second type is a 16-byte value generated by the access-accept packet according to a formula. The formula is specifically as follows: MD5(Code+ID+Length+RequestAuth+Attributes+Secret).

The attributes field carries specific authentication and authorization information and configuration details of request and response packets, including a user account, a password, a login IP address, a login device IP address, and the like. The foregoing describes the method 200, the method 300, the method 400, and the method 500 in embodiments of this application. The following describes a client device, a relay device, and a server device in embodiments of this application. The client device, the relay device, and the server device described below each have any function of the client device, the relay device, or the server device in the method 200, the method 300, the method 400, and the method 500.

FIG. 10 is a possible schematic diagram of a structure of the client device in the foregoing embodiments. A client device 600 shown in FIG. 10 implements, for example, functions of the client device in the method 200, the method 300, the method 400, and the method 500.

As shown in FIG. 10, the client device 600 includes a sending unit 601, a receiving unit 602, and a download unit 603. Optionally, the client device 600 further includes a processing unit. All or some of the units in the client device 600 are implemented by using software, hardware, firmware, or any combination thereof. The units in the client device 600 are configured to perform corresponding functions of the client device in the method 200, the method 400, and the method 500. Specifically, the sending unit 601 is configured to support the client device 600 in performing S210, S401, and S407. The receiving unit 602 is configured to support the client device 600 in performing S240, S405, and S408. The download unit 603 is configured to support the client device 600 in performing S250. The processing unit included in the client device 600 is configured to support the client device 600 in performing the steps such as determining that the type of the target file and the type of the client device 600 meet the match condition, performing upgrade based on the system software, and loading the patch based on the patch file.

For example, the receiving unit 602 is further configured to support the client device 600 in receiving the target file sent by the relay device.

In this embodiment of this application, division into the units is an example, and is merely logical function division. During actual implementation, another division manner may be optionally used.

In some embodiments, the units in the client device 600 are integrated into one unit. For example, the units in the client device 600 are integrated into a same chip. The chip includes a processing circuit, and an input interface and an output interface that are internally connected to and communicate with the processing circuit. The download unit 603 is implemented by using the processing circuit in the chip. The receiving unit 602 is implemented by using the input interface in the chip. The sending unit 601 is implemented by using the output interface in the chip. For example, the chip is implemented by using one or more field-programmable gate arrays (English full name: field-programmable gate array, FPGA for short), a programmable logic device (English full name: programmable logic device, PLD for short), a controller, a state machine, gate logic, a discrete hardware component, any other appropriate circuit, or any combination of circuits that can perform various functions described in this application.

In some other embodiments, the units in the client device 600 exist alone physically. In some other embodiments, some units in the client device 600 exist alone physically, and the other units are integrated into one unit, for example, the download unit is integrated into the processing unit. In some embodiments, integration of different units is implemented in a form of hardware, that is, different units correspond to same hardware. For another example, integration of different units is implemented in a form of a software unit.

When the client device 600 is implemented by using hardware, in an example, the download unit 603 in the client device 600 is implemented, for example, by using a main control board 910 in a device 900. The receiving unit 602 and the sending unit 601 in the client device 600 are implemented, for example, by using an interface board 930 in the device 900. In another example, the download unit 603 in the client device 600 is implemented, for example, by using a processor 1501 in a device 1500. The receiving unit 602 and the sending unit 601 in the client device 600 are implemented, for example, by using a communications interface 1504 in the device 1500.

When the client device 600 is implemented by using software, the units in the client device 600 are, for example, software generated after the main control board 910 in the device 900 or the processor 1501 in the device 1500 reads program code stored in a memory. For example, the client device 600 is a virtualized device. The virtualized device includes but is not limited to at least one of a virtual machine, a container, and a pod. In some embodiments, the client device 600 is deployed on a hardware device (for example, a physical server) in a form of the virtual machine. For example, the client device 600 is implemented based on a general-purpose physical server with reference to a network functions virtualization (Network Functions Virtualization, NFV) technology. When the virtual machine is used for implementation, the client device 600 is, for example, a virtual host, a virtual router, or a virtual switch. By reading this application, persons skilled in the art can obtain the client device 600 through virtualization on the general-purpose physical server with reference to the NFV technology. In some other embodiments, the client device 600 is deployed on a hardware device in a form of the container (for example, a docker container). For example, a process in which the client device 600 performs the foregoing method embodiment is encapsulated in an image file, and the hardware device creates the client device 600 by running the image file. In some other embodiments, the client device 600 is deployed on a hardware device in a form of the pod. The pod includes a plurality of containers, and each container is configured to implement one or more units in the client device 600.

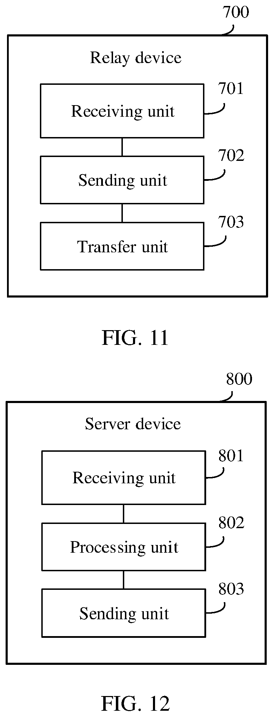

FIG. 11 is a possible schematic diagram of a structure of the relay device in the foregoing embodiments. A relay device 700 shown in FIG. 11 implements, for example, functions of the relay device in the method 200, the method 300, the method 400, and the method 500.

As shown in FIG. 11, the relay device 700 includes a receiving unit 701, a sending unit 702, and a transfer unit 703. Optionally, the relay device 700 further includes a processing unit. All or some of the units in the relay device 700 are implemented by using software, hardware, firmware, or any combination thereof. The units in the relay device 700 are configured to perform corresponding functions of the relay device in the method 200, the method 300, the method 400, and the method 500. Specifically, the receiving unit 701 is configured to support the relay device 700 in performing S220, S340, S401, S403, and S406. The transfer unit 703 is configured to support the relay device 700 in transferring the file to the client device. The sending unit 702 is configured to support the relay device 700 in performing S230, S310, S402, S404, S405, and S408. The processing unit included in the relay device 700 is configured to support the relay device 700 in performing the step such as determining the target file based on the type of the client device.

In this embodiment of this application, division into the units is an example, and is merely logical function division. During actual implementation, another division manner may be optionally used.

In some embodiments, the units in the relay device 700 are integrated into one unit. For example, the units in the relay device 700 are integrated into a same chip. The chip includes a processing circuit, and an input interface and an output interface that are internally connected to and communicate with the processing circuit. The transfer unit 703 is implemented by using the processing circuit in the chip. The receiving unit 701 is implemented by using the input interface in the chip. The sending unit 702 is implemented by using the output interface in the chip. For example, the chip is implemented by using one or more field-programmable gate arrays (English full name: field-programmable gate array, FPGA for short), a programmable logic device (English full name: programmable logic device, PLD for short), a controller, a state machine, gate logic, a discrete hardware component, any other appropriate circuit, or any combination of circuits that can perform various functions described in this application.

In some other embodiments, the units in the relay device 700 exist alone physically. In some other embodiments, some units in the relay device 700 exist alone physically, and the other units are integrated into one unit. For example, in some embodiments, the transfer unit 703 and the sending unit 702 are a same unit. In some other embodiments, the transfer unit 703 and the sending unit 702 are different units. In some embodiments, integration of different units is implemented in a form of hardware, that is, different units correspond to same hardware. For another example, integration of different units is implemented in a form of a software unit.

When the relay device 700 is implemented by using hardware, in an example, the receiving unit 701 and the sending unit 702 in the relay device 700 are implemented by using an interface board 930 in a device 900. The transfer unit 703 in the relay device 700 is implemented by using a main control board 910 and the interface board 930 in the device 900. In another example, the transfer unit 703 in the relay device 700 is implemented by using a processor 1501 and a communications interface 1504 in a device 1500. The receiving unit 701 and the sending unit 702 in the relay device 700 are implemented by using the communications interface 1504 in the device 1500.

When the relay device 700 is implemented by using software, the units in the relay device 700 are, for example, software generated after the main control board 910 in the device 900 or the processor 1501 in the device 1500 reads program code stored in a memory. For example, the relay device 700 is a virtualized device. The virtualized device includes but is not limited to at least one of a virtual machine, a container, and a pod. In some embodiments, the relay device 700 is deployed on a hardware device (for example, a physical server) in a form of the virtual machine. For example, the relay device 700 is implemented based on a general-purpose physical server with reference with an NFV technology. When the virtual machine is used for implementation, the relay device 700 is, for example, a virtual host, a virtual router, or a virtual switch. By reading this application, persons skilled in the art can obtain the relay device 700 through virtualization on the general-purpose physical server with reference to the NFV technology. In some other embodiments, the relay device 700 is deployed on a hardware device in a form of the container (for example, a docker container). For example, a process in which the relay device 700 performs the foregoing method embodiment is encapsulated in an image file, and the hardware device creates the relay device 700 by running the image file. In some other embodiments, the relay device 700 is deployed on a hardware device in a form of the pod. The pod includes a plurality of containers, and each container is configured to implement one or more units in the relay device 700. FIG. 12 is a possible schematic diagram of a structure of the server device in the foregoing embodiments. A server device 800 shown in FIG. 12 implements, for example, functions of the server device in the method 300, the method 400, and the method 500.

As shown in FIG. 12, the server device 800 includes a receiving unit 801, a processing unit 802, and a sending unit 803. All or some of the units in the server device 800 are implemented by using software, hardware, firmware, or any combination thereof. The units in the server device 800 are configured to perform corresponding functions of the server device in the method 300, the method 400, and the method 500. Specifically, the receiving unit 801 is configured to support the server device 800 in performing S320, S402, and S404. The processing unit 802 is configured to support the server device 800 in performing S330 and the step such as determining the target file based on the type of the client device. The sending unit 803 is configured to support the server device 800 in performing S340, S403, and S406. In this embodiment of this application, division into the units is an example, and is merely logical function division. During actual implementation, another division manner may be optionally used.

In some embodiments, the units in the server device 800 are integrated into one unit. For example, the units in the server device 800 are integrated into a same chip. The chip includes a processing circuit, and an input interface and an output interface that are internally connected to and communicate with the processing circuit. The processing unit 802 is implemented by using the processing circuit in the chip. The receiving unit 801 is implemented by using the input interface in the chip. The sending unit 803 is implemented by using the output interface in the chip. For example, the chip is implemented by using one or more field-programmable gate arrays (English full name: field-programmable gate array, FPGA for short), a programmable logic device (English full name: programmable logic device, PLD for short), a controller, a state machine, gate logic, a discrete hardware component, any other appropriate circuit, or any combination of circuits that can perform various functions described in this application.

In some other embodiments, the units in the server device 800 exist alone physically. In some other embodiments, some units in the server device 800 exist alone physically, and the other units are integrated into one unit. For example, in some embodiments, the processing unit 802 and the sending unit 803 are a same unit. In some other embodiments, the processing unit 802 and the sending unit 803 are different units. In some embodiments, integration of different units is implemented in a form of hardware, that is, different units correspond to same hardware. For another example, integration of different units is implemented in a form of a software unit.

When the server device 800 is implemented by using hardware, in an example, the processing unit 802 in the server device 800 is implemented, for example, by using a main control board 910 in a device 900. The receiving unit 801 and the sending unit 803 in the server device 800 are implemented, for example, by using an interface board 930 in the device 900. In another example, the processing unit 802 in the server device 800 is implemented, for example, by using a processor 1501 in a device 1500. The receiving unit 801 and the sending unit 803 in the server device 800 are implemented, for example, by using a communications interface 1504 in the device 1500.

When the server device 800 is implemented by using software, the units in the server device 800 are, for example, software generated after the main control board 910 in the device 900 or the processor 1501 in the device 1500 reads program code stored in a memory. For example, the server device 800 is a virtualized device. The virtualized device includes but is not limited to at least one of a virtual machine, a container, and a pod. In some embodiments, the server device 800 is deployed on a hardware device (for example, a physical server) in a form of the virtual machine. For example, the server device 800 is implemented based on a general-purpose physical server with reference with an NFV technology. When the virtual machine is used for implementation, the server device 800 is, for example, a virtual host, a virtual router, or a virtual switch. By reading this application, persons skilled in the art can obtain the server device 800 through virtualization on the general-purpose physical server with reference to the NFV technology. In some other embodiments, the server device 800 is deployed on a hardware device in a form of the container (for example, a docker container). For example, a process in which the server device 800 performs the foregoing method embodiment is encapsulated in an image file, and the hardware device creates the server device 800 by running the image file. In some other embodiments, the server device 800 is deployed on a hardware device in a form of the pod. The pod includes a plurality of containers, and each container is configured to implement one or more units in the server device 800.

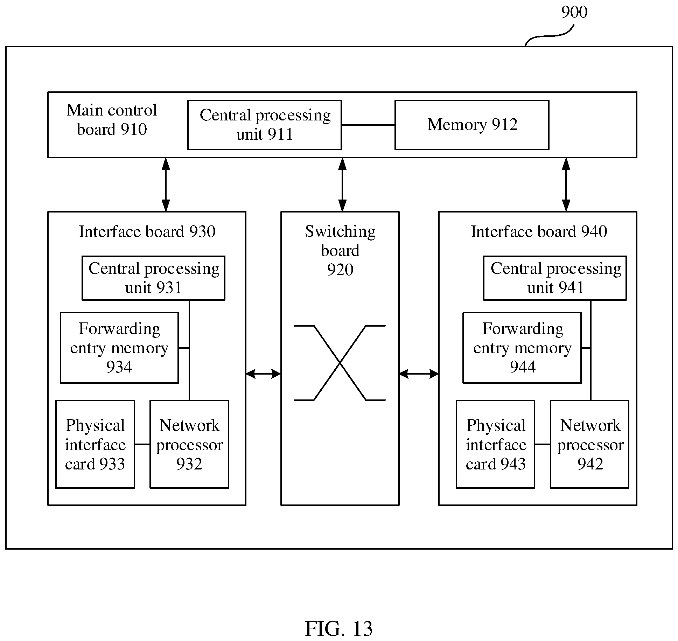

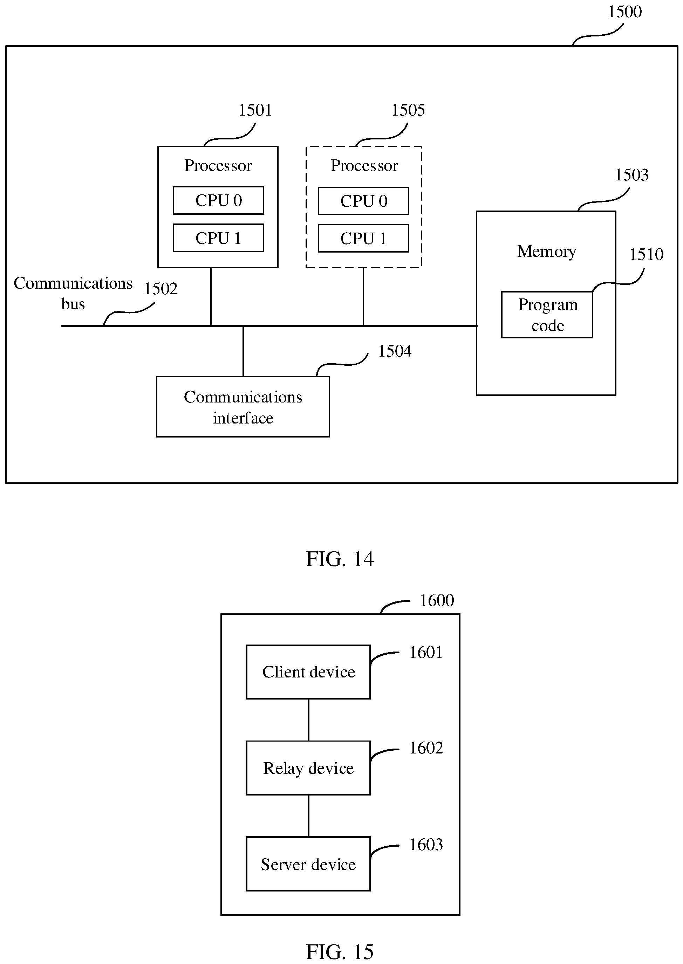

The foregoing describes, by using the client device 600, the relay device 700, and the server device 800, a manner of implementing the client device, the relay device, or the server device mainly from a perspective of a logical function. The following describes, by using the device 900 and the device 1500, a manner of implementing the client device, the relay device, or the server device from a perspective of hardware. The device 900 shown in FIG. 13 or the device 1500 shown in FIG. 14 is an example of a hardware structure of the client device, the relay device, or the server device. The device 900 or the device 1500 corresponds to the client device, the relay device, or the server device in the method 200, the method 300, the method 400, or the method 500. Hardware, modules, and the foregoing other operations and/or functions in the device 900 or the device 1500 are separately used to implement the steps and methods implemented by the client device, the relay device, or the server device in the method embodiments. For a detailed process in which the device 900 or the device 1500 transfers a file, refer to the method 200, the method 300, the method 400, or the method 500. For brevity, details are not described herein again. The steps in the method 200, the method 300, the method 400, or the method 500 are implemented by using an integrated logic circuit of hardware in a processor of the device 900 or the device 1500, or by using instructions in a form of software. The steps in the methods disclosed with reference to embodiments of this application may be directly performed by a hardware processor, or may be performed by using a combination of hardware and software modules in the processor. The software module is located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

FIG. 13 is a schematic diagram of a structure of a device 900 according to an example embodiment of this application. For example, the device 900 is configured as the client device, the relay device, or the server device in the method 200, the method 300, the method 400, or the method 500. The device 900 includes a main control board 910 and an interface board 930.

The main control board is also referred to as a main processing unit (main processing unit, MPU) or a route processor card (route processor card). The main control board 910 is configured to control and manage components in the device 900, including route computation, device management, device maintenance, and a protocol-based processing function. The main control board 910 includes a central processing unit 911 and a memory 912.

The interface board 930 is also referred to as a line processing unit (line processing unit, LPU), a line card (line card), or a service board. The interface board 930 is configured to provide various service interfaces and forward a data packet. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 930 includes a central processing unit 931, a network processor 932, a forwarding entry memory 934, and a physical interface card (physical interface card, PIC) 933.

The central processing unit 931 in the interface board 930 is configured to control and manage the interface board 930 and communicate with the central processing unit 911 in the main control board 910.

The network processor 932 is configured to forward a packet. A form of the network processor 932 may be a forwarding chip. Specifically, the network processor 932 is configured to forward a received packet based on a forwarding table stored in the forwarding entry memory 934. If a destination address of the packet is an address of the device 900, the network processor 932 sends the packet to a CPU (for example, the central processing unit 911) for processing. If the destination address of the packet is not the address of the device 900, the network processor 932 searches for, based on the destination address, a next hop and an outbound interface corresponding to the destination address in the forwarding table, and forwards the packet to the outbound interface corresponding to the destination address. Processing on an uplink packet includes processing on a packet inbound interface and forwarding table lookup. Processing on a downlink packet includes forwarding table lookup and the like.

The physical interface card 933 is configured to implement an interconnection function at a physical layer. Original traffic enters the interface board 930 from the physical interface card 933, and a processed packet is sent from the physical interface card 933. The physical interface card 933, also referred to as a subcard, may be installed on the interface board 930, and is responsible for converting an optical/electrical signal into a packet, performing validity check on the packet, and forwarding the packet to the network processor 932 for processing. In some embodiments, the central processing unit may also perform a function of the network processor 932, for example, implement software forwarding based on a general-purpose CPU. Therefore, the network processor 932 is not required in the physical interface card 933.

Optionally, the device 900 includes a plurality of interface boards. For example, the device 900 further includes an interface board 940. The interface board 940 includes a central processing unit 941, a network processor 942, a forwarding entry memory 944, and a physical interface card 943.

Optionally, the device 900 further includes a switching board 920. For example, the switching board 920 may also be referred to as a switch fabric unit (switch fabric unit, SFU). When the network device has the plurality of interface boards 930, the switching board 920 is configured to complete data exchange between the interface boards. For example, the interface board 930 and the interface board 940 may communicate with each other by using the switching board 920.

The main control board 910 and the interface board 930 are coupled. For example, the main control board 910, the interface board 930 and the interface board 940, and the switching board 920 are connected to a system backplane through a system bus to implement interworking. In a possible implementation, an inter-process communication (inter-process communication, IPC) channel is established between the main control board 910 and the interface board 930, and the main control board 910 and the interface board 930 communicate with each other through the IPC channel. Logically, the device 900 includes a control plane and a forwarding plane. The control plane includes the main control board 910 and the central processing unit 931. The forwarding plane includes components used for forwarding, for example, the forwarding entry memory 934, the physical interface card 933, and the network processor 932. The control plane performs functions such as a function of a router, generating a forwarding table, processing signaling and protocol packets, and configuring and maintaining a status of a device. The control plane delivers the generated forwarding table to the forwarding plane. On the forwarding plane, the network processor 932 searches the forwarding table delivered by the control plane to forward a packet received by the physical interface card 933. The forwarding table delivered by the control plane is stored, for example, in the forwarding entry memory 934. In some embodiments, the control plane and the forwarding plane are, for example, completely separated, and are not on a same device. For example, if the device 900 is configured as the client device, the physical interface card 933 in the interface board 930 is configured to send a request packet and receive a response packet, and the physical interface card 933 is further configured to send the response packet to the central processing unit 911 in the main control board 910. The central processing unit 911 is configured to download a target file from the relay device based on first indication information in the response packet.

For example, if the device 900 is configured as the relay device, the physical interface card 933 in the interface board 930 is configured to receive a request packet and send a response packet to the client device, and the central processing unit 911 and the physical interface card 933 in the main control board 910 are further configured to transfer a target file to the client device.

For example, if the device 900 is configured as the server device, the physical interface card 933 in the interface board 930 is configured to receive a request packet, and the physical interface card 933 is further configured to send the request packet to the central processing unit 911 in the main control board 910. The central processing unit 911 is configured to generate a response packet. The physical interface card 933 is further configured to send the response packet to the relay device.

An operation on the interface board 940 is consistent with an operation on the interface board 930. For brevity, details are not described again.

It should be noted that there may be one or more main control boards. When there are a plurality of main control boards, the main control boards may include, for example, an active main control board and a standby main control board. There may be one or more interface boards. A network device having a stronger data processing capability provides more interface boards. There may also be one or more physical interface cards in the interface board. There may be no switching board or one or more switching boards. When there are a plurality of switching boards, load sharing and redundancy backup may be jointly implemented. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, a central processing unit in the interface board and a central processing unit in the main control board may be combined to form one central processing unit in the card, to perform functions obtained after the two central processing units are combined. The device of this form (for example, a network device such as a low-end switch or a router) has a weak data exchange and processing capability. A specific architecture that is to be used depends on a specific networking deployment scenario. This is not limited herein.

FIG. 14 is a schematic diagram of a structure of a device 1500 according to an example embodiment of this application. For example, the device 1500 is configured as the client device, the relay device, or the server device in the method 200, the method 300, the method 400, or the method 500. The device 1500 may be a host, a server, a personal computer, or the like. The device 1500 may be implemented by using a general bus architecture.

The device 1500 includes at least one processor 1501, a communications bus 1502, a memory 1503, and at least one communications interface 1504.

The processor 1501 is, for example, a general-purpose central processing unit (central processing unit, CPU), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 1501 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), generic array logic (generic array logic, GAL), or any combination thereof.

The communications bus 1502 is configured to transfer information between the foregoing components. The communications bus 1502 may be classified into an address bus, a data bus, a control bus, and the like. For ease of representation, only one thick line is used to represent the bus 1502 in FIG. 14, but this does not mean that there is only one bus or only one type of bus.

For example, the memory 1503 is a read-only memory (read-only memory, ROM) or another type of static storage device capable of storing static information and instructions, or a random access memory (random access memory, RAM) or another type of dynamic storage device capable of storing information and instructions, or is an electrically erasable programmable read-only memory (electrically erasable programmable read-only Memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium capable of carrying or storing expected program code in an instruction form or a data structure form and capable of being accessed by a computer. However, the memory 1503 is not limited thereto. For example, the memory 1503 exists independently, and is connected to the processor 1501 by using the communications bus 1502. Alternatively, the memory 1503 may be integrated into the processor 1501.

The communications interface 1504 is configured to communicate with another device or a communications network by using any apparatus such as a transceiver. The communications interface 1504 includes a wired communications interface, and may further include a wireless communications interface. The wired communications interface may be, for example, an Ethernet interface. The Ethernet interface may be an optical interface, an electrical interface, or a combination thereof. The wireless communications interface may be, for example, a wireless local area network (wireless local area network, WLAN) interface, a cellular network communications interface, or a combination thereof. During specific implementation, in an embodiment, the processor 1501 may include one or more CPUs, for example, a CPU 0 and a CPU 1 shown in FIG. 14.

During specific implementation, in an embodiment, the device 1500 may include a plurality of processors, for example, the processor 1501 and a processor 1505 shown in FIG. 14. Each of the processors may be a single-core processor (single-CPU) or a multi-core processor (multi-CPU). The processor herein may refer to one or more devices, circuits, and/or processing cores configured to process data (such as computer program instructions).

During specific implementation, in an embodiment, the device 1500 may further include an output device and an input device. The output device communicates with the processor 1501, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 1501, and may receive an input from a user in a plurality of manners. For example, the input device may be a mouse, a keyboard, a touchscreen device, or a sensing device.

In some embodiments, the memory 1503 is configured to store program code 1510 for executing the solutions in this application, and the processor 1501 may execute the program code 1510 stored in the memory 1503. In other words, the device 1500 may implement the methods provided in the method embodiments by using the processor 1501 and the program code 1510 in the memory 1503.

As shown in FIG. 15, an embodiment of this application provides a communications system 1600. The system 1600 includes a client device 1601, a relay device 1602, and a server device 1603. Optionally, the client device 1601 is the client device 600 shown in FIG. 10, the device 900 shown in FIG. 13, or the device 1500 shown in FIG. 14, the relay device 1602 is the relay device 700 shown in FIG. 11, the device 900 shown in FIG. 13, or the device 1500 shown in FIG. 14, and the server device 1603 is the server device 800 shown in FIG. 12, the device 900 shown in FIG. 13, or the device 1500 shown in FIG. 14.

Persons of ordinary skill in the art may be aware that, in combination with the examples described in embodiments disclosed in this specification, method steps and units may be implemented by electronic hardware, computer software, or a combination thereof. To clearly describe the interchangeability between hardware and software, the foregoing has generally described steps and compositions of each embodiment according to functions. Whether the functions are performed by hardware or software depends on particular applications and design constraint conditions of the technical solutions. Persons of ordinary skill in the art may use different methods to implement the described functions for each particular application, but it should not be considered that the implementation goes beyond the scope of this application. It may be clearly understood by persons skilled in the art that, for the purpose of convenient and brief description, for a detailed working process of the foregoing described system, apparatus, and unit, refer to a corresponding process in the foregoing method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments of this application.

In addition, functional units in embodiments of this application may be integrated into one processing unit, each of the units may exist alone physically, or two or more units are integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for indicating a computer device (which may be a personal computer, a server, or a network device) to perform all or some of the steps of the method described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

In embodiments of this application, terms such as "first" and "second" are used to distinguish same items or similar items that have basically same functions. It should be understood that there is no logical or time sequence dependency between "first" and "second", and a quantity and an execution sequence are not limited. It should also be understood that although terms such as "first" and "second" are used in the following description to describe various elements, these elements should not be limited by the terms. These terms are merely used to distinguish one element from another element. For example, without departing from the scope of various examples, first indication information may be referred to as second indication information, and similarly, second indication information may be referred to as first indication information. Both the first indication information and the second indication information may be indication information, and in some cases, may be separate and different indication information.

The term "at least one" in this application means one or more. The terms "system" and "network" may be used interchangeably in this specification.

The term "if" may be interpreted as a meaning "when..." ("when" or "upon"), "in response to determining", or "in response to detecting". Similarly, according to the context, the phrase "if it is determined that..." or "if (a stated condition or event) is detected" may be interpreted as a meaning "when it is determined that...", "in response to determining...", "when (a stated condition or event) is detected", or "in response to detecting (a stated condition or event)".

The foregoing descriptions are merely specific implementations of this application, but are not intended to limit the protection scope of this application. Any equivalent modification or replacement readily figured out by persons skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When being implemented by using the software, all or some of embodiments may be implemented in a form of a computer program product. The computer program product includes one or more computer program instructions. When the computer program instructions are loaded and executed on a computer, all or some of the procedures or functions according to embodiments of this application are generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive).

Persons of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

The foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A file download method, applied to a communications system comprising a client device, a relay device, and a server device, wherein the method comprises:
sending, by the client device, a request packet;
receiving, by the client device, a response packet sent by the relay device, wherein the response packet is a response to the request packet, the response packet comprises first indication information, and the first indication information indicates that the relay device comprises a target file; and
downloading, by the client device, the target file from the relay device based on the first indication information.

2. The method according to claim 1, wherein the first indication information comprises first information of the target file, and the first information comprises one or more of the following: a file name, a version number, a file type, and a file storage address.

3. The method according to claim 1 or 2, wherein the request packet comprises second indication information, and the second indication information indicates that the client device requests the target file.

4. The method according to claim 3, wherein the second indication information comprises one or more of the following: a file name, a version number, and a file type.

5. The method according to any one of claims 1 to 4, wherein the request packet is one of the following protocol packets: a dynamic host configuration protocol DHCP packet, a remote authentication dial-in user service RADIUS packet, or a point-to-point protocol over Ethernet PPPoE packet.

6. The method according to claim 5, wherein when the request packet is the DHCP packet, the relay device is a DHCP relay relay device, and the client device is a DHCP client device.

7. The method according to claim 6, wherein the request packet is a DHCP discover discover packet, and the response packet is a DHCP offer offer packet; or
the request packet is a DHCP request request packet, and the response packet is a DHCP acknowledge ACK packet.

8. The method according to claim 5, wherein when the request packet is the RADIUS packet, the relay device is a RADIUS relay device, and the client device is a RADIUS client device.

9. The method according to claim 8, wherein the request packet is a RADIUS access-request access-request packet, and the response packet is a RADIUS access-accept access-accept packet; or
the request packet is a RADIUS accounting-request accounting-request packet, and the response packet is a RADIUS accounting-response accounting-response packet.

10. The method according to claim 5, wherein when the request packet is the PPPoE packet, the relay device is a PPPoE relay device, and the client device is a PPPoE client device.

11. The method according to claim 10, wherein the request packet is a PPPoE active discovery initiation PADI packet, and the response packet is a PPPoE active discovery offer PADO packet; or
the request packet is a PPPoE active discovery request PADR packet, and the response packet is a PPPoE active discovery session-confirmation PADS packet.

12. The method according to any one of claims 1 to 11, wherein the response packet comprises a first option part, the first option part comprises a type field and a value field, the value field comprises the first indication information, and the type field is used to identify that the first option part comprises the first indication information.

13. The method according to claim 3 or 4, wherein the request packet comprises a second option part, the second option part comprises a type field and a value field, the value field comprises the second indication information, and the type field is used to identify that the second option part comprises the second indication information.

14. The method according to any one of claims 1 to 13, wherein before the downloading, by the client device, the target file from the relay device based on the first indication information, the method further comprises:
determining, by the client device, that a type of the target file and a type of the client device meet a match condition.

15. The method according to any one of claims 1 to 14, wherein the target file is system software or a patch file, and after the downloading, by the client device, the target file from the relay device based on the first indication information, the method further comprises:
performing, by the client device, upgrade based on the system software; or
loading, by the client device, a patch based on the patch file.

16. The method according to any one of claims 1 to 15, wherein the target file is obtained by the relay device from the server device.

17. A file transfer method, applied to a communications system comprising a client device, a relay device, and a server device, wherein the method comprises:
receiving, by the relay device, a first request packet sent by the client device;
sending, by the relay device, a first response packet to the client device, wherein the first response packet is a response to the first request packet, the first response packet comprises first indication information, and the first indication information indicates that the relay device comprises a target file; and
transferring, by the relay device, the target file to the client device in response to the first response packet.

18. The method according to claim 17, wherein the first request packet comprises second indication information, and the second indication information indicates that the client device requests the target file.

19. The method according to claim 17 or 18, wherein before the transferring, by the relay device, the target file to the client device, the method further comprises:
sending, by the relay device, a second request packet to the server device;
receiving, by the relay device, a second response packet sent by the server device, wherein the second response packet is a response to the second request packet, the second response packet comprises third indication information, and the third indication information indicates that the server device comprises the target file; and
downloading, by the relay device, the target file based on the third indication information.

20. The method according to claim 19, wherein the second request packet comprises fourth indication information, and the fourth indication information indicates that the relay device requests the target file.

21. The method according to claim 17, wherein before the sending, by the relay device, a first response packet to the client device, the method further comprises:
determining, by the relay device, the target file based on a type of the client device, wherein a type of the target file and the type of the client device meet a match condition.

22. A file transfer method, applied to a communications system comprising a client device, a relay device, and a server device, wherein the method comprises:
receiving, by the server device, a first request packet sent by the relay device;
generating, by the server device, a first response packet, wherein the first response packet is a response to the first request packet, the first response packet comprises first indication information, and the first indication information indicates that the server device comprises a target file; and
sending, by the server device, the first response packet to the relay device.

23. The method according to claim 22, wherein the first request packet comprises second indication information, and the second indication information indicates that the relay device requests the target file.

24. The method according to claim 22, wherein before the generating, by the server device, a first response packet, the method further comprises:
determining, by the server device, the target file based on a type of the client device, wherein a type of the target file and the type of the client device meet a match condition.

25. A client device, wherein the client device comprises:
a sending unit, configured to send a request packet;
a receiving unit, configured to receive a response packet sent by a relay device, wherein the response packet is a response to the request packet, the response packet comprises first indication information, and the first indication information indicates that the relay device comprises a target file; and
a download unit, configured to download the target file from the relay device based on the first indication information.

26. The client device according to claim 25, wherein the client device further comprises:
a processing unit, configured to determine that a type of the target file and a type of the client device meet a match condition.

27. The client device according to claim 25, wherein the target file is system software or a patch file, and the client device further comprises:
a processing unit, configured to: perform upgrade based on the system software; or load a patch based on the patch file.

28. A relay device, wherein the relay device comprises:
a receiving unit, configured to receive a first request packet sent by a client device;
a sending unit, configured to send a first response packet to the client device, wherein the first response packet is a response to the first request packet, the first response packet comprises first indication information, and the first indication information indicates that the relay device comprises a target file; and
a transfer unit, configured to transfer the target file to the client device in response to the first response packet.

29. The relay device according to claim 28, wherein the sending unit is further configured to send a second request packet to a server device;
the receiving unit is further configured to receive a second response packet sent by the server device, wherein the second response packet is a response to the second request packet, the second response packet comprises third indication information, and the third indication information indicates that the server device comprises the target file; and
the transfer unit is further configured to download the target file based on the third indication information.

30. The relay device according to claim 29, wherein the second request packet comprises fourth indication information, and the fourth indication information indicates that the relay device requests the target file.

31. The relay device according to claim 28, wherein the relay device further comprises:
a processing unit, configured to determine the target file based on a type of the client device, wherein a type of the target file and the type of the client device meet a match condition.

32. A server device, wherein the server device comprises:
a receiving unit, configured to receive a first request packet sent by a relay device;
a processing unit, configured to generate a first response packet, wherein the first response packet is a response to the first request packet, the first response packet comprises first indication information, and the first indication information indicates that the server device comprises a target file; and
a sending unit, configured to send the first response packet to the relay device.

33. The server device according to claim 32, wherein the processing unit is further configured to determine the target file based on a type of a client device, wherein a type of the target file and the type of the client device meet a match condition.

34. A communications system, wherein the communications system comprises the client device according to any one of claims 25 to 27, the relay device according to any one of claims 28 to 31, and the server device according to claim 32 or 33.
